# EUROPÄISCHE PATENTSCHRIFT

(11) **EP 2 787 321 B1**
(45) Veröffentlichungstag und Bekanntmachung des Hinweises auf die Patenterteilung: **16.09.2015**
(21) Anmeldenummer: 13162633.5
(22) Anmeldetag: 05.04.2013
(51) Int. Cl.: G01C 15/00, G01B 11/27

(54) **Oberflächenbestimmung für Objekte mittels geodätisch genauem Einzelpunktbestimmen und Scannen**
Surface determination for objects using precise geodesic point determination and scanning
Détermination de surface d'objets à l'aide de la détermination d'un seul point précis géodésique et du balayage

(43) Veröffentlichungstag der Anmeldung: 08.10.2014
(73) Patentinhaber: Leica Geosystems AG, 9435 Heerbrugg (CH)
(72) Erfinder: Zogg, Hans-Martin, CH-8592 Uttwil (CH); Kotzur, Norbert, CH-9450 Altstätten (CH)
(74) Vertreter: Gyaja, Christoph Benjamin

(56) Entgegenhaltungen:
- US-A1- 2005 057 745

## Beschreibung

Die Erfindung betrifft ein Verfahren zur Objektvermessung für und mit einem geodätischen Vermessungsgerät nach dem Oberbegriff des Anspruchs 1, ein geodätisches Vermessungsgerät nach Anspruch 12, ein System aus einem geodätischen Vermessungsgerät und einer GNSS-Empfangseinheit nach Anspruch 14, sowie ein Computerprogrammprodukt nach Anspruch 15.

Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind die Identifikation des Zielobjekts (Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen.

Moderne Totalstationen weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z.B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z.B. anhand einer koaxial angeordneten Kamera erfasst werden.

Beispielhaft ist der Aufbau gattungsgemässer Zielfernrohre von geodätischen Geräten in der EP 1 081 459 oder der EP 1 662 278 gezeigt.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge nicht genügend präzise angezielt werden können (d.h. nicht geodätischen Genauigkeitsanforderungen entsprechend), weisen gängige Vermessungsgeräte inzwischen standardmässig eine automatische Zielverfolgungs-Funktion für als Ziel-Reflektor dienende Prismen (ATR: "Automatic Target Recognition") auf. Dafür sind gängigerweise eine weitere separate ATR-Lichtquelle - z.B. ein Multimodefaserausgang, der optische Strahlung mit einer Wellenlänge im Bereich von 850 nm emittiert - und ein spezieller, für diese Wellenlänge sensitiver ATR-Detektor (z.B. CCD-Flächensensor) zusätzlich im Teleskop integriert. Beispielsweise wird in der EP 2 141 450 ein Vermessungsgerät mit einer Funktion zur automatischen Anzielung eines retro-reflektierenden Ziels sowie mit einer automatischen Zielverfolgungsfunktionalität beschrieben.

Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche

Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt.

Mittels einer solchen Bilderfassungseinheit können neben dem Vermessen von bestimmten Zielpunkten auch Bilder einer Messszene erfasst werden. Damit kann ein zu vermessendes Objekt in dem Bild erfasst und gegebenenfalls einem Benutzer auf einem Display des Vermessungsgeräts dargestellt werden. Basierend auf diesem Bild können weitere Informationen für das Objekt abgeleitet werden.

Durch eine entsprechende Bildverarbeitung können beispielsweise eine Oberflächenbeschaffenheit für das Objekt oder eine räumliche Ausdehnung des Objekts zumindest grob bestimmt werden. Die räumliche Ausdehnung oder die Form des Objekts können dabei mittels Kantenextraktion auf Basis des Bildes bestimmt werden.

Für eine genauere Bestimmung dieser Objekteigenschaften können zusätzlich zu den Bildinformationen Positionsinformationen für einen oder mehrere Punkte, die auf dem Objekt liegen, berücksichtigt werden. Hierzu wird der eine oder die mehreren Punkte mit dem Vermessungsgerät genau angezielt und vermessen. Die so hinsichtlich ihrer Position bestimmten Punkte werden als so genannte Stützpunkte zusammen mit der Bildinformation verarbeitet, wodurch eine genauere Angabe z.B. über die Lage des im Bild erfassten Objektteils gemacht werden kann.

Nachteilig hierbei ist jedoch, dass insbesondere die Lagebestimmung für den abgebildeten Objektteil nur abhängig von den bestimmten Stützpunkten vorgenommen werden kann und eine gute Genauigkeit nur mit einer steigenden Anzahl von Stützpunkten erreichbar ist. Ein solches Punkterfassen mit z.B. einer Totalstation würde jedoch einen unverhältnismässig hohen Zeitaufwand bedeuten (im Vergleich zu einem Bilderfassen des Objekts). Zudem kann mittels der Bildverarbeitung die Form des Objektteils (z.B. wenn das Objekt eine gekrümmte Oberfläche aufweist) ebenfalls nur mit einer limitierten Genauigkeit ermittelt bzw. angenähert werden.

Ausserdem ergibt sich bei der Aufgabe eines Vermessens des Objekts aus unterschiedlichen Perspektiven das Problem der präzisen Verknüpfung von erfassten Bilddaten (entsprechend den Aufstellpositionen des Vermessungsgeräts). Eine solche Verknüpfung kann bei für die zu verknüpfenden Bilder gemeinsam erfassbaren Stützpunkten teilweise verlässlich und genau erfolgen, jedoch sind die dazu gemeinsam bestimmbaren Stützpunkte aufgrund der unterschiedlichen Perspektiven relativ zu dem Objekt zumeist nicht aus jeder Aufstellung anzielbar. Typischerweise werden die Bilder mittels eines weiteren Bildverarbeitens der überlappenden Randbereiche der Bilder zusammengefügt.

Es ist daher eine Aufgabe der vorliegenden Erfindung ein verbessertes Vermessungsgerät bzw. ein verbessertes Vermessungsverfahren bereitzustellen, welches eine schnellere und genauere Objektbestimmung ermöglicht, insbesondere eine Oberflächenbestimmung für das Objekt.

Eine weitere Aufgabe der Erfindung ist das Bereitstellen eines Vermessungsgeräts mit dem ein Objekt aus unterschiedlichen Perspektiven erfassbar ist, wobei die aus den Perspektiven ermittelten Objektdaten zur Bestimmung einer Objekteigenschaft schneller und genauer verknüpfbar sind.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zur Vermessung eines Objekts für und mit einem geodätischen Vermessungsgerät. Im Rahmen des Verfahrens erfolgen ein Ableiten einer Oberflächeninformation zumindest für einen Objektbereich, insbesondere bezüglich einer Form und/oder räumlichen Ausdehnung des Objekts, und wenigstens ein geodätisch genaues Einzelpunktbestimmen für einen Objektpunkt innerhalb des Objektbereichs, wobei eine Position des mindestens einen Objektpunkts geodätisch genau bestimmt wird.

Erfindungsgemäss wird ferner ein Scannen zum Ableiten der Oberflächeninformation durchgeführt mit einem objektpunktunabhängigen Abtasten des Objektbereichs durch fortlaufendes Ausrichtungsändern der Messstrahlung, mit einem Bestimmen von einer jeweiligen Entfernung und von einer jeweiligen Ausrichtung der für die Entfernungsmessung emittierten Messstrahlung für Scanpunkte innerhalb des Objektbereichs, insbesondere in einer vorbestimmten Scanpunktauflösung, und mit einem Erzeugen einer die Oberflächeninformation repräsentierenden und die Scanpunkte aufweisenden Punktwolke. Zudem wird die Oberflächeninformation basierend auf der bestimmten Position des mindestens einen Objektpunkts aktualisiert. Das Aktualisieren der Oberflächeninformation erfolgt insbesondere derart, dass eine daraus resultierende (aktualisierte) Oberflächeninformation einen (optimierten) objekttreuen Bezug aufweist, d.h. die resultierende Oberflächeninformation repräsentiert mindestens den Objektbereich präziser (z.B. hinsichtlich Lage, Grösse und/oder Form des Objektbereichs). Durch diese Aktualisierung wird somit insbesondere eine wirklichkeitstreue Repräsentation des Objektbereichs bzw. des Objekts bereitgestellt.

Durch das Bestimmen der Ausrichtung der Messachse und der Entfernung für jeweilige Scanpunkte sind insbesondere die Positionen der Scanpunkte in einem Objektkoordinatensystem (z.B. in einem inneren Bezugssystem eines Vermessungsgeräts) bestimmt.

Des Weiteren erfolgt das Aktualisieren der Oberflächeninformation basierend auf der bestimmten Position des mindestens einen Objektpunkts insbesondere automatisch, insbesondere automatisch sobald das Scannen und Einzelpunktmessen durchgeführt ist.

Gemäss einer bestimmten Ausführungsform der Erfindung werden im Rahmen des Einzelpunktbestimmens eine Messstrahlung präzise auf den mindestens einen Objektpunkt ausgerichtet und bei der (gleich bleibenden) Ausrichtung der Messstrahlung auf den mindestens einen Objektpunkt vermittels der Messstrahlung die Position des mindestens einen Objektpunkts geodätisch genau bestimmt, insbesondere durch Ausrichtungsbestimmen für die Messstrahlung und Entfernungsmessen vermittels der Messstrahlung. Entsprechend einer alternativen erfindungsgemässen Ausführungsform wird die Position des mindestens einen Objektpunkts mittels Erfassen von GNSS-Signalen und Erzeugen von GNSS-Positionsinformation abgeleitet, insbesondere wobei eine GNSS-Empfangseinheit in bekannter relativer Position zu dem Objektpunkt positioniert und die GNSS-Positionsinformation durch die GNSS-Empfangseinheit erzeugt werden.

Erfindungsgemäss kann somit sowohl eine Objektoberfläche oder zumindest ein Teilbereich dieser Oberfläche flächig, mit einer vorbestimmten Punkt-zu-Punkt-Auflösung und einer Scan-Messrate von z.B. 100-10000 Messpunkten pro Sekunde abgetastet werden (und mit einer geodätischen Massstäben entsprechenden Messreichweite) als auch ein einzelner Punkt des Objekts hochgenau bestimmt und z.B. bei fester Ausrichtung der Messstrahlung auf den einzelnen Punkt oder durch Platzieren eines Vermessungsstabs mit einem GNSS-Empfänger an dem Punkt vermessen werden.

Durch das Scannen wird eine Punktwolke für das zu vermessende Objekt abgeleitet, wobei die Position, Orientierung und Skalierung der Wolke dann zunächst in dem inneren Koordinatensystem des Vermessungsgeräts bekannt und bestimmt sind. Im Fall dass das Vermessungsgerät vor dem Scannen bereits in ein äusseres Koordinatensystem eingemessen ist bzw. damit referenziert ist (d.h. zumindest die Orientierung des Geräts ist in diesem übergeordneten System bestimmt), kann die Punktwolke direkt in diesem äusseren Koordinatensystem bestimmt werden.

Das Scannen und Einzelpunktbestimmen werden mit einem entsprechend ausgebildeten Vermessungsgerät, insbesondere einer Totalstation, am gleichen Aufstellpunkt ausgeführt, damit eine koordinativ korrekte Aktualisierung der Oberflächeninformation erfolgen kann. Zudem ist für das Erfassen der GNSS-Information insbesondere ein Lotstock mit einem GNSS-Empfänger (GPS, GLONASS oder Galileo) vorgesehen, der auf dem zu vermessenden Punkt positioniert wird und dort eine Positionsinformation ableitbar macht, wobei diese Information an das Vermessungsgerät übertragbar ist.

Das erfindungsgemässe Verfahren zur Objektvermessung wird also insbesondere auf und mit einem entsprechenden Vermessungsgerät ausgeführt, ohne dass ein post-processing Schritt zur Datenverarbeitung notwendig ist.

Dadurch dass die Einzelpunkte ebenfalls innerhalb desjenigen (Winkel-)Bereichs (Scanbereichs) vermessen werden, der abgetastet wird, kann die durch das Scannen erfasste Punktwolke insbesondere hinsichtlich deren Lage durch das Heranziehen der für die einzelnen Objektpunkte hochgenau bestimmten Positionen angepasst werden.

Ein einzelner Scanpunkt (d.h. ein Punkt der Punktwolke) muss dabei nicht einem einzelnen Messpunkt (d.h. einem beim Scannen erfassten Zahlenwertepaar für Ausrichtung und Entfernung) entsprechen. Ein Scanpunkt (insbesondere dessen Position in dem inneren Bezugssystem des Vermessungsgeräts) kann vielmehr aus mehreren Messpunkten berechnet sein, z.B. durch Mittelwertbilden auf Basis der Positionen der mehreren Messpunkte. Diese Messpunkte werden beispielsweise bei dem kontinuierlichen Bewegen der Messstrahlung und gleichzeitigem Erfassen von Messwerten über eine dabei entsprechend abgetastet Fläche auf dem Objekt erfasst. So können für jeden Scanpunkt eine Richtung und eine Entfernung zur zu vermessenden Oberfläche auch aus mehreren Entfernungs- und Richtungswerten für mehrere Messpunkte abgeleitet werden. Dadurch ist eine Genauigkeitssteigerung erzielbar.

Gemäss einer speziellen Ausführungsform der Erfindung wird im Rahmen des Aktualisierens der Oberflächeninformation die Oberfläche und/oder ein Volumen für den Objektbereich, insbesondere für das Objekt, bestimmt, wobei die bestimmte Position des mindestens einen Objektpunkts zusammen mit der Punktwolke verarbeitet wird, insbesondere wobei ein Oberflächenwert bzw. ein Volumenwert berechnet wird.

Des Weiteren gibt die Oberflächeninformation erfindungsgemäss insbesondere eine Lage und/oder zumindest teilweise eine räumliche Ausdehnung des Objekts an.

Durch das Scannen und Einzelpunktbestimmen wird in diesem Zusammenhang also die Fläche und/oder das Volumen des Objekts genauer bestimmbar, da z.B. einzelne Oberflächenabschnitte des Objekts hinsichtlich deren Grösse, Lage und/oder Form durch Berücksichtigen der geodätisch genau bestimmten Objektpunkte präziser bestimmbar sind und somit Flächen- und Volumenberechnungen entsprechend genauer durchführbar sind.

Die Punktwolke wird gemäss einer weiteren erfindungsgemässen Ausführung derart verarbeitet, dass auf Basis der Positionen der Scanpunkte eine zusammenhängende Fläche approximiert wird, wobei die Fläche die Oberflächeninformation repräsentiert, insbesondere wobei die Scanpunkte in der Fläche liegen. Ein solches Ableiten der zusammenhängenden Fläche kann dabei z.B. mittels Ausgleichsrechnung erfolgen, insbesondere durch Regression, Triangulation der Scan- und/oder Einzelpunkte oder eine "best-fit"-Methode. Damit ist eine Fläche (bezüglich deren räumlicher Ausdehnung und Lage im Objektkoordinatensystem) berechenbar, die die bestimmten Scanpunkte repräsentiert und für weitere Berechnung heranziehbar ist, z.B. für eine Volumen- oder Oberflächenbestimmung für das Objekt.

Durch das erfindungsgemässe Vermessungsverfahren wird zudem eine präzise Überwachung von Objekten, beispielsweise Bauwerken (z.B. Staumauer, Brücke) ermöglicht. Dabei können Formveränderungen, Volumenveränderungen, Bewegungen der Bausubstanz oder ähnliche Prozesse beobachtet werden. Gemäss einer speziellen Ausführungsform wird das Objektvermessungsverfahren in diesem Zusammenhang zeitlich versetzt mehrmals ausgeführt, wobei die jeweils aktuell erzeugte Oberflächeninformation für das Objekt mit zumindest einer vorangehend erzeugten Oberflächeninformation verglichen wird, insbesondere wobei eine bei der Oberflächen- und/oder Volumenbestimmung bestimmte Oberflächen- und/oder Volumeneigenschaft jeweils entsprechend verglichen wird.

Die Objektüberwachung erfolgt beispielsweise also auf Basis einer für das Objekt bestimmten Oberfläche oder eines Volumens. Diese Information wird bei einem erstmaligen Vermessen des Objekts bestimmt und mit einer bei einem späteren Messen des Objekts berechneten entsprechenden Information verglichen. Die Messungen können in diesem Zusammenhang mit einem zeitlichen Abstand von Sekunden bis Monaten erfolgen.

Eine mittels Scannen erfasste Punktwolke kann des Weiteren mit Designdaten (z.B. CAD-Daten, die eine Sollform und räumliche Sollausdehnung für ein Objekt angeben) verglichen werden, wobei auf dieser Basis ein Soll-Ist-Vergleich für das durch die Designdaten und die Punktwolke repräsentierte Objekt durchgeführt werden kann.

Hinsichtlich einer weit reichenden Erfassung eines Objekts (d.h. Erfassung des Objekts z.B. aus unterschiedlichen Richtungen oder Perspektiven, damit mehrere Teilbereiche der Objektoberfläche erfassbar sind) erfolgt gemäss einer weiteren Ausführungsform der Erfindung mindestens ein weiteres Ableiten einer weiteren Oberflächeninformation für einen weiteren Objektbereich des Objekts, wobei die weitere Oberflächeninformation basierend auf einem Erzeugen einer weiteren Punktwolke durch Scannen des weiteren Objektbereichs abgeleitet wird. Dabei wird insbesondere die eine weitere Oberflächeninformation für den weiteren Objektbereich basierend auf einem weiteren vermessenen Objektpunkt aktualisiert, insbesondere wobei der eine weitere vermessene Objektpunkt durch mindestens ein weiteres geodätisch genaues Einzelpunktbestimmen für den wenigstens einen weiteren Objektpunkt des weiteren Objektbereichs bestimmt ist.

Das Scannen der Objektbereiche und insbesondere das Einzelpunktbestimmen für die Objektpunkte erfolgt dabei insbesondere aus unterschiedlichen Perspektiven, insbesondere in unterschiedlichen Aufstellungen des geodätischen Vermessungsgeräts, relativ zu dem Objekt.

Bezüglich des Erzeugens von mehreren Punktwolken repräsentieren die (erste) Punktwolke und die eine weitere Punktwolke insbesondere gemeinsam die Oberflächeninformation, insbesondere wobei das Aktualisieren der Oberflächeninformation für das Objekt basierend auf den Punktwolken sowie auf dem mindestens einen Objektpunkt und dem wenigstens einen weiteren vermessenen Objektpunkt erfolgt.

Durch das Erfassen der mehreren Punktwolken für ein Objekt oder mehrere Objekte aus unterschiedlichen Perspektive - d.h. Abtasten und Einzelpunktbestimmen aus jeweils unterschiedlichen Aufstellpunkten des dafür verwendeten Vermessungsgeräts (Totalstation) oder mittels mehrerer an unterschiedlichen Positionen aufgestellten Vermessungsgeräte - sind dadurch Bereiche des Objekts bzw. der Objekte erfassbar, die aus einer einzigen Aufstellposition nicht mit der Messstrahlung zugänglich sind. Diese Bereiche werden abgetastet und dazu jeweilige Oberflächeninformationen, wie z.B. eine jeweils zugehörige Fläche, extrahiert.

Gemäss der Erfindung erfolgt im Rahmen einer bestimmten Ausführungsform ein derartiges Referenzieren der einen weiteren Punktwolke und insbesondere des wenigstens einen weiteren Objektpunkts, dass deren Lage in einem Objektkoordinatensystem bestimmt ist, insbesondere wobei durch das Referenzieren die (erste) Punktwolke und die eine weitere Punktwolke sowie insbesondere der mindestens eine Objektpunkt und der wenigstens eine weitere Objektpunkt in dem Objektkoordinatensystem gemeinsam vorliegen.

Insbesondere kann erfindungsgemäss mindestens ein Referenzpunkt einen Bezug des Objektkoordinatensystems zu einem äusseren Koordinatensystem für das Referenzieren bereitstellen, wobei das Referenzieren durch ein präzises Einzelpunktbestimmen für den mindestens einem Referenzpunkt erfolgt, insbesondere wobei in der Aufstellung, in der eine der Punktwolken für das Objekt erfasst wird, der mindestens eine Referenzpunkt vermessen wird.

Vorteilhafterweise kann durch das Referenzieren der Oberflächeninformation in einem übergeordneten Koordinatensystem (z.B. Erdkoordinatensystem) erfindungsgemäss ein mobiles Monitoring realisiert werden, indem das Objekt in einer ersten Aufstellung vermessen und dafür die Oberflächeninformation gemäss der Erfindung bestimmt wird und diese Oberflächeninformation in dem übergeordneten Koordinatensystem referenziert wird. Dadurch wird die erzeugte Punktwolke in dem übergeordneten Koordinatensystem registriert und die Orientierung (insbesondere Lage und Skalierung) der Wolke darin bekannt.

Zu einem späteren Zeitpunkt kann das Objekt nach einem Wiederaufstellen des Vermessungsgeräts (auch an einem anderen Aufstellpunkt möglich) erneut gescannt und die dann erzeugte Punkte Punktwolke analog zum ersten Vermessen in dem übergeordneten Koordinatensystem registriert werden. Dadurch dass beide Punktwolken dann im gleichen übergeordneten Koordinatensystem bekannt sind, d.h. beispielsweise deren Lagen und Grössen, können die mittels dieser Punktwolken generierten Oberflächeninformationen miteinander verglichen werden und somit kann eine Überwachung des Objekts erfolgen.

Auch das Referenzieren der Punktwolken wird gemäss einer speziellen Ausführungsform direkt auf und mit dem Vermessungsgerät ausgeführt, so dass kein zusätzliches post-processing für diesen Schritt notwendig ist. Die Steuerungseinheit des Vermessungsgeräts ist in diesem Zusammenhang zur Ausführung einer entsprechenden Funktionalität zur Referenzierung (Registrierung von Punktwolken in einem äusseren Koordinatensystem) ausgestattet, d.h. entsprechend konfiguriert.

Hinsichtlich der Aktualisierung der Oberflächeninformation wird erfindungsgemäss im Rahmen des Einzelpunktbestimmens insbesondere ein Objektpunkt als Stützungspunkt für den Objektbereich vermessen und dessen Position bestimmt, wobei der Stützungspunkt berücksichtigt wird zur Definition des Objektbereichs, insbesondere zur Definition der Oberfläche im Rahmen des Aktualisierens der Oberflächeninformation.

Im Rahmen des erfindungsgemässen Vermessungsverfahrens wird gemäss einer speziellen Ausführungsform ein Objektmodell zumindest für den einen Objektbereich (welcher mittels Scannen abgetastet wurde) in Abhängigkeit von der Oberflächeninformation, insbesondere in Abhängigkeit von der Punktwolke, und von der bestimmten Position des mindestens einen Objektpunkts erzeugt. Ein solches Modell kann beispielsweise mittels Triangulation basierend auf den erfassten Scanpunkten erstellt bzw. berechnet werden.

Für ein solches Modell werden beispielsweise Oberflächensegmente eines Objekts, die aus Punktwolken extrahiert sind (z.B. mittels positions- und grössenmässiger Approximation einer Fläche an die Verteilung der Scanpunkte), unter Berücksichtigung der zusätzlich vermessenen einzelnen Objektpunkte zusammengefügt und daraus computerbasiert ein wirklichkeitsgetreues Abbild des Objekts erzeugt.

Des Weiteren wird gemäss einer speziellen erfindungsgemässen Ausführung ein Filtern der Scanpunkte der Punktwolke in Abhängigkeit von einem Erfüllen eines definierten Berücksichtigungskriteriums durchgeführt, insbesondere hinsichtlich einer Lage der Scanpunkte innerhalb eines Sollmessbereichs, wobei die Scanpunkte in Abhängigkeit von dem Filtern für das Aktualisieren der Oberflächeninformation berücksichtigt werden.

Ein solches Berücksichtigungskriteriums kann beispielsweise durch geometrische Formen gegeben sein, wobei nur diejenigen Scanpunkte der Punktwolke verarbeitete werden, die innerhalb einer solchen Form liegen. In diesem Zusammenhang kann z.B. ein für die Vermessung relevanter Bereich vorgegeben werden, insbesondere durch Definition eines Polygons in einem Bild, in dem das zu vermessende Objekt erfasst ist, und nur die Scanpunkte innerhalb des Polygons als Oberflächeninformation herangezogen und verarbeitet werden. So können beispielsweise genau die Punkte, die zwischen einer linken und einer rechten Strassenbegrenzung liegen, für das Vermessen der Strasse berücksichtigt werden.

Bezüglich einer Berücksichtigung von aktuell vorliegenden Messbedingungen wird im Rahmen des Objektvermessungsverfahrens insbesondere zusätzlich eine atmosphärische Zustandsinformation erfasst und/oder es ist eine geometrische Messinformation definiert, insbesondere meteorologische Daten und/oder Messachsenfehler.

Insbesondere wird in diesem Zusammenhang bei dem Bestimmen der Entfernung für die jeweiligen Scanpunkte, insbesondere bei dem Bestimmen der Entfernung zu dem mindestens einen Objektpunkt, die atmosphärische Zustandsinformation und/oder geometrische Messinformation verarbeitet und basierend darauf erfolgt eine Entfernungskorrektur für das Bestimmen der jeweiligen Entfernung. Alternativ oder zusätzlich können die im Rahmen des Scannens bestimmten Scanpunkte bezüglich deren Position, insbesondere die Lage der Punktwolke in dem Objektkoordinatensystem, basierend auf den atmosphärischen Zustandsinformationen und/oder geometrische Messinformation angepasst werden.

Mit anderen Worten kann bei einem Messvorgang (Einzelpunktbestimmen oder Scannen) eine solche Zustandsinformation miterfasst werden und basierend auf dieser Information eine Messkorrektur vorgenommen werden. Die Korrektur kann dabei z.B. mittels einer "Look-Up Table", durch die z.B. für eine bestimmte Umgebungstemperatur ein zugehöriger Korrekturwert definiert ist, ermittelt werden.

Erfindungsgemäss wird das Verfahren insbesondere durch und mit dem geodätischen Vermessungsgerät (Totalstation, Multistation oder Tachymeter) ausgeführt, wobei das Vermessungsgerät zumindest eine Scanfunktionalität zum scannenden Erfassen der Scanpunkte und Erzeugen der Punktwolke und eine Einzelpunktbestimmungsfunktionalität zum hochpräzisen Positionsbestimmen für mindestens einen Objektpunkt aufweist.

Insbesondere ist das geodätische Vermessungsgerät gemäss einer der nachfolgend beschriebenen, erfindungsgemässen Ausführungsformen ausgebildet.

Hinsichtlich des Bestimmens der Position des mindestens einen Objektpunkt (Einzelpunktbestimmen) mittels GNSS-Signalen wird das Verfahren erfindungsgemäss insbesondere durch ein System aus Vermessungsgerät und GNSS-Empfangseinheit ausgeführt, insbesondere wobei das System gemäss einer nachfolgend beschriebenen, erfindungsgemässen Ausführungsform für das System ausgebildet ist.

Die Erfindung betrifft somit auch ein geodätisches Vermessungsgerät, insbesondere eine Totalstation oder Multistation, zum Vermessen eines Objekts, mit einer eine Schwenkachse definierenden Basis, mit einem auf der Basis angeordneten, um die Schwenkachse relativ zur Basis schwenkbaren Aufbau, wobei der Aufbau eine im wesentlichen orthogonal zur Schwenkachse stehende Kippachse definiert, und mit einer Anzieleinheit, insbesondere Ziel-Fernrohr, wobei die Anzieleinheit um die Kippachse relativ zum Aufbau schwenkbar angeordnet ist und eine Emissionseinheit mit einer Strahlquelle zur Erzeugung und Emission einer Messstrahlung aufweist. Zudem verfügt das Vermessungsgerät über eine Entfernungsmessfunktionalität zur Messung von Entfernungen zu Punkten, über eine Winkelmessfunktionalität zur Messung einer Ausrichtung der Messstrahlung und über eine Steuerungs- und Verarbeitungseinheit zur Datenverarbeitung und zur Steuerung des Vermessungsgeräts. Ferner ist eine Einzelpunktbestimmungsfunktionalität vorgesehen, bei deren Ausführung gesteuert durch die Steuerungs- und Verarbeitungseinheit eine Position mindestens eines Objektpunkts innerhalb wenigstens eines (bestimmten) Objektbereichs geodätisch genau bestimmt wird.

Erfindungsgemäss verfügt das geodätische Vermessungsgerät zudem über eine Scanfunktionalität zum Ableiten einer Oberflächeninformation zumindest für einen Objektbereich, wobei bei Ausführung der Scanfunktionalität gesteuert durch die Steuerungs- und Verarbeitungseinheit ein objektpunktunabhängiges Abtasten des Objektbereichs durch fortlaufendes Ausrichtungsändern der Messstrahlung erfolgt, eine jeweilige Entfernung und eine jeweilige Ausrichtung der für die Entfernungsmessung emittierten Messstrahlung für Scanpunkte innerhalb des Objektbereichs bestimmt werden, insbesondere in einer vorbestimmten Scanpunktauflösung, und eine die Oberflächeninformation repräsentierende und die Scanpunkte aufweisende Punktwolke erzeugt wird. Darüber hinaus ist ein Objektbestimmungsfunktionalität vorgesehen, bei deren Ausführung gesteuert durch die Steuerungs- und Verarbeitungseinheit die Oberflächeninformation zumindest für den einen Objektbereich, insbesondere für das Objekt, basierend zumindest auf einer durch die Einzelpunktbestimmungsfunktionalität bestimmten Position des mindestens einen Objektpunkts aktualisiert wird.

Gemäss einer speziellen, erfindungsgemässen Ausführungsform des Vermessungsgeräts ist die Steuerungs- und Verarbeitungseinheit derart konfiguriert, dass mit dem geodätischen Vermessungsgerät ein oben beschriebenes, erfindungsgemässes Verfahren zur Vermessung eines Objekts ausführbar ist.

Gemäss einer spezifischen Ausführungsform des erfindungsgemässen geodätischen Vermessungsgeräts erfolgt bei Ausführung der Einzelpunktbestimmungsfunktionalität ein hochpräzises Ausrichten der Messstrahlung auf den mindestens einen Objektpunkt innerhalb des Objektbereichs und bei der (festen, gleich bleibenden) Ausrichtung der Messstrahlung auf den mindestens einen Objektpunkt wird vermittels der Messstrahlung die Position des mindestens einen Objektpunkts geodätisch genau bestimmt, insbesondere durch Ausrichtungsbestimmen für die Messstrahlung und Entfernungsmessen zu dem Objektpunkt auf der Objektoberfläche vermittels der Messstrahlung.

Für eine verbesserte Benutzerfreundlichkeit kann das Vermessungsgerät insbesondere eine Fernsteuereinheit mit einer Auswerteeinheit aufweisen, wobei die Objektbestimmungsfunktionalität durch die Auswerteeinheit ausführbar ist und/oder eine Anzeigeeinheit zur Darstellung von Messinformation aufweisen, insbesondere wobei ein Scanfortschritt durch ein zumindest teilweises Darstellen von Scanpunkten einer Punktwolke darstellbar ist.

Zur Erfassung weiterer positionsrelevanter Informationen verfügt das erfindungsgemässe Vermessungsgerät in einer speziellen Ausbaustufe über ein GNSS-Modul zur Erfassung von GNSS-Positionsinformation (z.B. GPS, GLONASS oder Galileo), insbesondere wobei die GNSS-Positionsinformation zur Positionskorrektur der Scanpunkte und/oder der Punktwolke im äusseren Koordinatensystem und/oder zur Messwertanpassung bei der Scanpunktvermessung und/oder Referenzpunktvermessung verarbeitbar ist.

Das Vermessungsgerät kann insbesondere derart ausgebildet sein, dass die Anzieleinheit über ein Abbildungssystem mit einer eine Fokussiergruppe aufweisenden Abbildungsoptik und einer Bildebene zur Erzeugung und graphischen Bereitstellung einer Abbildung eines Anzielsichtfeldes verfügt, insbesondere wobei das Anzielsichtfeld durch das Abbildungssystem definiert ist und die Abbildung des Anzielsichtfeldes in der Bildebene mittels einer Abbildungsfokussierung durch die Fokussiergruppe graphisch scharf bereitstellbar ist.

Die Erfindung betrifft zudem ein System aus einem oben beschriebenen, erfindungsgemässen geodätischen Vermessungsgerät und einer GNSS-Empfangseinheit. Die GNSS-Empfangseinheit ist hierbei zum Empfang von GNSS-Signalen und zum Erzeugen von GNSS-Positionsinformation aus den GNSS-Signalen ausgebildet, ist relativ zu dem geodätischen Vermessungsgerät beweglich positionierbar und ist derart ausgebildet, dass die GNSS-Positionsinformation zu dem geodätischen Vermessungsgerät übertragbar ist, insbesondere wobei das geodätischen Vermessungsgerät eine GNSS-Datenempfangseinheit aufweist. Bei Ausführung der Einzelpunktbestimmungsfunktionalität erfolgt erfindungsgemäss das Bestimmen der Position des mindestens einen Objektpunkts basierend auf mittels der GNSS-Empfangseinheit erzeugter GNSS-Positionsinformation, wobei die GNSS-Empfangseinheit in bekannter relativer Position bezüglich des Objektpunkts vorliegt.

Die Erfindung betrifft ausserdem ein Computerprogrammprodukt mit Programmcode, der auf einem maschinenlesbaren Träger gespeichert ist. Das Computerprogrammprodukt ist zur Steuerung des Scannens und des Einzelpunktbestimmens und zur Durchführung des Aktualisierens der Oberflächeninformation gemäss einem oben beschrieben Verfahren zur Objektvermessung konfiguriert, insbesondere wenn das Programm auf einer als Steuerungs- und Verarbeitungseinheit eines erfindungsgemässen Vermessungsgeräts bzw. Systems oder auf einer als Auswerteeinheit eines erfindungsgemässen Vermessungsgeräts ausgebildeten elektronischen Datenverarbeitungseinheit ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: zwei erfindungsgemässe geodätische Vermessungsgeräte und das Erfassen eines Objekts aus unterschiedlichen Perspektiven damit;
- Fig.2a-c: jeweilige im Rahmen eines Scannens bzw. erfindungsgemässen Referenzierens erzeugte Punktwolken für ein Objekt;
- Fig.3a-c: jeweils eine Rekonstruktion für ein durch ein erfindungsgemässes Objektvermessen vermessenes Objekt;
- Fig.4a-b: ein auf Basis eines erfindungsgemässen Objektvermessens erzeugtes Modell für ein Objekt; und
- Fig.5: ein Ablaufdiagramm für einen Vermessungsprozess zur Volumenbestimmung für ein Objekt gemäss der Erfindung.

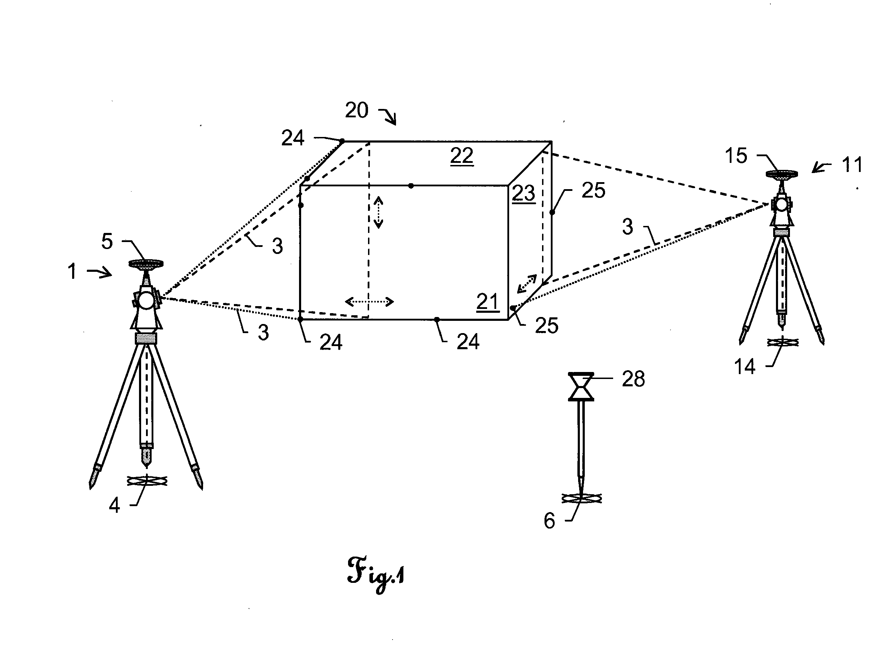

Fig. 1 zeigt zwei erfindungsgemässe geodätische Vermessungsgeräte 1,11 (Totalstationen bzw. Multistations), ein zu vermessendes Objekt 20 und einen Retro-Reflektor 28. Mit dem Einsatz von mehreren Vermessungsgeräten 1,11 kann das Objekt 20 aus unterschiedlichen Perspektiven erfasst werden bzw. es kann ein grösserer Messbereich abgedeckt werden.

Eine "Multistation" verfügt über die typischen Funktionalitäten einer Totalstation und weist zudem eine schnelle und hochgenaue Scanfunktionalität auf, wobei mit verbesserten (schneller ansteuerbaren und schneller agierenden, leistungsfähigeren) Steuerungsmotoren eine schnellere und präzisere Ausrichtung der Anzieleinrichtung erzielt werden kann. Dadurch ist es möglich, eine Vielzahl von Punkten in einem vordefinierten Messbereich in relativ kurzer Zeit durch ein kontinuierliches Bewegen der Messstrahlung 3 abzutasten und eine entsprechende Punktwolke mit den abgetasteten Punkten zu erzeugen. Z.B. können so 1000 oder 10000 oder mehr Messpunkte pro Sekunde während des Änderns der Ausrichtung der Messstrahlung (zum Abtasten des Objekts 20) erfasst werden. Dieser Abtastvorgang kann aufgrund der erreichbaren Messgenauigkeit (Genauigkeit im Rahmen einer (hinsichtlich der Messdauer) entsprechenden geodätisch genauen Einzelpunktvermessung) in Verbindung mit der hohen Messgeschwindigkeit und der damit realisierbaren Scanpunktauflösung als echtes Scannen bezeichnet werden. Ein einzelner Scanpunkt (d.h. ein Punkt der Punktwolke) muss dabei nicht einem bestimmten Messpunkt entsprechen. Ein Scanpunkt (insbesondere dessen Position in dem inneren Bezugssystem des Vermessungsgeräts) kann vielmehr aus mehreren Messpunkten berechnet sein, z.B. durch Mittelwertbilden auf Basis der Positionen der mehreren Messpunkte. So können für jeden Scanpunkt eine Richtung und eine Entfernung zur zu vermessenden Oberfläche auch aus mehreren Entfernungs- und Richtungswerten für mehrere Messpunkte abgeleitet werden. Dadurch ist eine Genauigkeitssteigerung erzielbar.

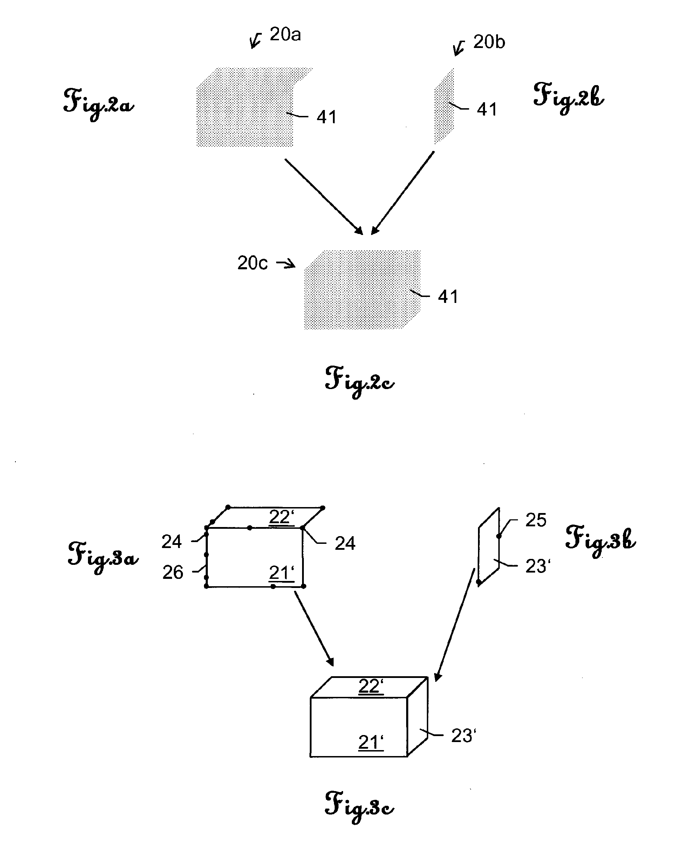

Das Objekt 20 wird in einer ersten Aufstellung des ersten Vermessungsgeräts 1 (= Positionierung des Geräts 1 an einem ersten Aufstellpunkt 4) aus einer ersten Perspektive abgetastet, wobei eine entsprechende erste Punktwolke 20a (vgl. Fig. 2a) in dem inneren Bezugssystem des Vermessungsgeräts 1 erzeugt wird. Die Punktwolke 20a besteht hierbei aus Scanpunkten 41, die auf den Flächen 21,22 des Objekts 20 mit dem Vermessungsgerät 1 erfasst wurden, und repräsentiert damit eine Oberflächeninformation für die beiden Objektbereiche 21,22 des Objekts 20. Die Oberflächeninformation gibt hier zumindest eine geometrische Form des Objekts 20 bzw. der Objektbereiche 21,22 an. Die weitere Oberfläche 23 des Objekts 20 kann ausgehend von der Aufstellposition 4 nicht angezielt oder abgetastet werden.

Zudem erfolgt in dieser ersten Aufstellung ein geodätisch genaues Vermessen zusätzlicher Einzelpunke 24 des Objekts 20. Hierzu wird die Messstrahlung 3 präzise auf den jeweiligen Objektpunkt 24 ausgerichtet und in dieser Ausrichtung werden eine Entfernung zu dem Punkt 24 und (durch Winkelmessung mit dem Vermessungsgerät 1) die Ausrichtung der Messstrahlung 3 bestimmt. Das Einzelpunktmessen (Einzelpunktbestimmen) erfolgt unabhängig vom Scannen des Objekts 20. Ein solches Einzelpunktmessen zu einem Punkt 24 kann beispielsweise mit Hilfe eines Reflektors oder eines Lotstocks mit Reflektor ausgeführt werden, wobei der Lotstock mit dessen unterer, zu einem Punkt zulaufenden Seite auf dem Punkt 24 positioniert wird und der Reflektor am Stock angezielt wird. Durch eine bekannte relative Positionierung von Stockspitz zum Reflektor kann dann daraus die Position des Punktes bestimmt werden.

Alternativ zu der Einzelpunktbestimmung mittels der Messstrahlung 3 kann erfindungsgemäss die Position des einzelnen Objektpunkts 24 (oder mehrere solcher Punkte 24) durch Verarbeitung empfangener GNSS-Signale (z.B. GPS-, GLONASS oder Galileo-Signale) bestimmt werden (hier nicht gezeigt). Dafür wird beispielsweise ein entsprechend zum Empfang der Signale ausgebildeter Empfänger an dem zu vermessenden Punkt positioniert und durch in dieser Position empfangene GNSS-Daten die Position des Empfängers bestimmt. Insbesondere wird hierfür ein Vermessungsstab verwendet, der an einer ersten Endseite einen solchen Empfänger aufweist und mit einer zweiten, spitz zulaufenden Endseite auf dem Punkt platziert wird. Die relative Position von Stabspitze zu Empfängerposition ist dabei bekannt und ermöglicht eine Berechnung des Punkts, an dem der Stab steht. Dabei können zudem Sensoren zur Erfassung einer Neigung des Stabes vorgesehen sein, wobei die damit bestimmbaren Neigungswerte bei der Positionsberechnung berücksichtigbar sind.

Daten, die mittels einer solchen GNSS-Einheit erfasst, vorverarbeitet und/oder erzeugt werden, werden zur Ausführung der erfindungsgemässen Aktualisierung der Oberflächeninformation an ein erfindungsgemässes Vermessungsgerät übertragen und durch das Vermessungsgerät weiterverarbeitet.

Auf Basis dieser beiden Messungen (Scannen und Einzelpunktmessen) wird erfindungsgemäss die Oberflächeninformation für das Objekt 20 aktualisiert. Die Punktwolke 20a wird dafür zusammen mit den Einzelpunkten 24 verarbeitet.

Dies wird insbesondere durch eine zunächst erfolgende Ableitung der Oberflächeninformation aus der Punktwolke 20a z.B. als ein durch die Punktwolke 20a repräsentiertes Flächensegment, dessen Form und räumliche Ausdehnung auf Basis der Punktwolke berechenbar ist, erreicht. Mittels der zusätzlich hochgenau vermessenen einzelnen Objektpunkte 24 kann dann eine Position des Flächensegments bestimmt bzw. die durch die Scanpunkte ableitbare Position des Segments angepasst werden, so dass die Oberfläche des Objekts 20 bzw. des gescannten Objektsegments präzise (im Speziellen mit geodätischer Genauigkeit) bestimmt ist. Die Lage der Fläche wird also im Speziellen an die Positionen der zusätzlich bestimmten Einzelpunkte 24 approximiert.

Hierbei wird durch den hochgenau bestimmten Objektpunkt 24 (bzw. die mehreren Objektpunkte 24) eine genauere Lagebestimmung für die Punktwolke durchgeführt. Die Einzelpunkte 24 können für diese Berechnung z.B. zur präzisen Definition bzw. Vermessung der Objektgrenzen (z.B. der Kanten des Objekts) herangezogen werden. Zudem kann durch einen oder mehrere vermessene Einzelpunkte 24 eine exakte Bestimmung der Objektoberfläche erzielt werden, wobei beispielsweise mehrere Einzelpunkte 24 in einem kritischen Bereich des Objekts 20 (der z.B. mit nur einer geringen Scanpunktauflösung erfassbar ist) vermessen werden.

Als Oberflächeninformation kann beispielsweise auch ein präziser Flächenwert für die Objektbereiche 21,22 aus der Verrechnung der Scanpunkte Punktwolke 20a mit den Objektpunkten 24 (insbesondere bezüglich deren gemessener Positionen) bestimmt werden.

Mit dem zweiten Vermessungsgerät 11 wird das Objekt 20 aus einer zweiten Aufstellposition 14, also aus einer zweiten Perspektive, gescannt. Bei dem Scanvorgang mit der zweiten Vermessungseinheit wird die Fläche 23 des Objekts 20 erfasst und eine entsprechende Punktwolke 20b (vgl. Fig. 2b) mit Scanpunkten 41 erzeugt, wobei die beiden Flächen 21,22 aus der zweiten Perspektive des zweiten Geräts 11 nicht mit der Messstrahlung 3 anzielbar sind.

Auch in dieser Aufstellung 14 werden weitere Einzelpunkte 25 für den Objektbereich 23 vermessen, wobei diese Einzelpunkte 25 wiederum zur Erzeugung und Aktualisierung einer weiteren Oberflächeninformation, die eine präzise Objektbestimmung z.B. hinsichtlich der Lage des Objekts 20 erlaubt, für den Objektbereich 23 berücksichtigbar sind.

Die beiden Punktwolken 20a-b liegen zunächst in zwei unterschiedlichen, dem jeweiligen Vermessungsgerät 1,11 zugeordneten, inneren Koordinatensystemen vor. Es existiert somit kein relativer Bezug der beiden Punktwolken 20a-b zueinander.

Zur Erlangung einer gemeinsamen Punktwolke 20c (vgl. Fig. 2c), die sowohl die Flächen 21,22 als auch die Fläche 23 des Objekts 20 positionstreu repräsentiert, werden die Lagen der beiden Punktwolken 20a-b gegenseitig in Bezug gesetzt. Die Referenzierung der Punktwolken 20a-b in ein gemeinsames Koordinatensystem kann dadurch erzielt werden, dass das erste Vermessungsgerät 1 (als Referenzpunkt) von dem zweiten Gerät 11 im Rahmen einer Einzelpunktvermessung hochpräzise angezielt wird und dabei eine Entfernung zwischen den Geräten 1,11 und eine Ausrichtung des zweiten Geräts 11 erfasst wird. Zudem wird das zweite Gerät 11 von dem ersten entsprechend angezielt. Dadurch ist die relative Positionierung und Ausrichtung der Vermessungsgeräte 1,11 (und damit auch der inneren Koordinatensysteme) bekannt und die beiden Punktwolken 20ab können in ein gemeinsames Koordinatensystem übertragen (z.B. in das Koordinatensystem des ersten Vermessungsgeräts, welches dabei als äusseres Koordinatensystem zu betrachten ist) bzw. gegenseitig darin referenziert werden.

Durch die Referenzierung können die Punktwolken 20a-b derart relativ miteinander verknüpft werden und deren Scanpunkte zu einer Gesamt-Punktwolke 20c zusammengefasst werden, dass durch diese zusammengesetzte Punktwolke 20c das Objekt 20 umfassender repräsentiert wird, als nur durch eine der Punktwolken 20a-b.

Die beiden Vermessungsgeräte 1,11 können zudem jeweils einen GNSS-Empfänger 5,15 aufweisen, durch den jeweils eine Positionsinformation eines Satellitensystems empfangen werden kann (z.B. GPS-Signale, GLONASS-Signale oder Galileo-Signale). Mittels dieser Positionsinformation kann für jedes der Vermessungssysteme 1,11 eine absolute Position im Erdkoordinatensystem bestimmt werden, wobei durch die ebenfalls bestimmbare Ausrichtung (siehe oben: gegenseitiges Anzielen, jedoch genügt hierfür die Bestimmung Messrichtung) der Geräte 1,11 zudem die absolute Ausrichtung der Geräte bestimmbar ist (z.B. Nord-Ost-Ausrichtung). Mit diesen Informationen können die Punktwolken 20a-c in diesem äusseren Koordinatensystem (Erdkoordinatensystem) registriert werden. Die Lagen der Punktwolken 20a-c und auch die Lage (Position und Ausrichtung) des Objekts 20 lassen sich so in diesem System bestimmen.

Alternativ zur Verwendung der beiden Vermessungsgeräte 1,11 kann ein einzelnes Vermessungsgerät an den beiden Aufstellpunkten 4,14 nacheinander aufgestellt werden und damit jeweils das Objekt 20 gescannt und die Punktwolken 20a-b erzeugt werden. Für jede Aufstellung des Vermessungsgeräts erfolgt dann eine erfindungsgemässe Referenzierung der jeweiligen erstellten Punktwolke 20a-b gegenüber einem übergeordneten Koordinatensystem, z.B. durch präzises Einzelanmessen des Reflektors 28, dessen Position 6 in diesem übergeordneten Koordinatensystem bekannt ist (bei jeweils bekannter Aufstellposition 4,14). Beide Punktwolken 20a-b können damit in einem gemeinsamen Koordinatensystem (insbesondere dem Objektkoordinatensystem) referenziert werden.

Bei nicht bekannten Positionen der Aufstellpunkte 4,14 kann ein Einmessen in ein äusseres Koordinatensystem (für jedes Vermessungsgerät 1,11 einzeln) dadurch erfolgen, dass neben dem einem positionsmässig bekannten Ziel 28 noch weitere Ziele (nicht dargestellt), deren Positionen ebenfalls in dem äusseren Koordinatensystem bekannt sind, mittels der Einzelpunktbestimmungsfunktionalität vermessen werden - zumindest bezüglich der Richtung zu diesen Zielen.

Ferner können Punktwolken erzeugt und gegenseitig referenziert werden bzw. in einem gemeinsamen Koordinatensystem registriert werden, indem eine erste Punktwolke in der ersten Aufstellposition gescannt wird und in dieser Aufstellung ein Reflektor in einer zweiten Position mit der Einzelpunktbestimmungsfunktionalität exakt vermessen wird. Anschliessend werden die Aufstellpositionen von Reflektor und Vermessungsgerät getauscht, eine weitere Punktwolke abgetastet und der Reflektor präzise mittels Einzelpunktmessung angemessen und dadurch die relative Position des Vermessungsgeräts zum Reflektor bestimmt. Durch ein Wiederholen dieser Schritte, also ein Aufstellen und ein präzises Vermessen des Reflektors an einer dritten Position und ein Tauschen der Position des Vermessungsgeräts mit dem Reflektor (an der dritten Position) und ein weiteres solches "Rückwärtsmessen", kann eine Abfolge von zueinander referenzierten Messungen ("Polygonzug") erzeugt werden. Die dabei erzeugten Punktwolken können damit in einem gemeinsamen Koordinatensystem bereitgestellt und/oder angezeigt - z.B. auf einem Display des Vermessungsgeräts - werden. Durch ein zusätzliches Referenzieren gegenüber einem äusseren Koordinatensystem (z.B. gegenüber den Erdkoordinaten) kann zudem eine Lage der Punktwolken in diesem Koordinatensystem berechnet werden, d.h. die absolute Lage der Punktwolken (und dadurch repräsentierter Objekte) im Erdkoordinatensystem ist bestimmt.

Mit dieser Methode kann das Objekt 20 bei Verwendung von nur einem Vermessungsgerät aus unterschiedlichen Perspektiven erfasst werden, wobei die dabei erzeugten Punktwolken (und die durch diese Punktwolken repräsentierten Objektoberflächenabschnitte) gegenseitig referenziert werden können und basierend zumindest auf durch die Punktwolken repräsentierten Objektdaten eine Objektinformation für das Objekts 20 (z.B. die gesamte, zusammenhängende Oberfläche) erzeugt werden.

Mit dieser Methode kann auch ein Überbrücken von Geländebereichen erfolgen, in denen nur schwer messbare bzw. keine bekannten Referenzpunkte vorliegen. Ein Polygonzug (Traverse) wird dann an einem ersten bekannten Referenzpunkt begonnen und weitere Überbrückungspunkte mittels des Vermessungsgeräts und Vermessen der Position eines Retroreflektors relativ zum Vermessungsgerät bereitgestellt. An diesen künstlich bereitgestellten Punkten kann eine Folgemessung angeknüpft werden. Ein solcher Polygonzug wird durch Vermessen eines weiteren bekannten, letzten Punkts abgeschlossen. Dabei können alle im Zuge der Überbrückung künstlich bereitgestellten Referenzpunkte basierend auf der bekannten Position des letzten Punkts hinsichtlich deren Positionen aktualisiert werden. Entsprechend kann auch ein korrigieren der Lagen von im Rahmen des Polygonzugs erstellten Punktwolken erfolgen.

Bei einem Erstellen mehrerer zueinander referenzierter Messungen, z.B. im Rahmen eines Polygonzuges, können die dabei erzeugten Messwerte der einzelnen Punktwolken für eine gegenseitige Anpassung der Messwerte herangezogen werden. D.h. wenn sich gegenseitig überlappende Messbereiche durch Scannen erfasst wurden, können jeweilige mehrmals vermessene Punkte durch ein Vergleichen, insbesondere Mittelwertbilden, der zugehörigen Messwerte bestimmt werden, nachdem die jeweiligen Punktwolken erfindungsgemäss mittels Referenzpunktmessen gegenseitig referenziert wurden und die Messpunkte koordinativ im gleichen Koordinatensystem bekannt sind.

Des Weiteren kann bei der Verwendung mehrere Multistations (Totalstationen), mit denen jeweils eine Messung und Erstellung einer Punktwolke erfolgt und eine Orientierung zu einem Referenzpunkt bestimmt wird, bei einer Aktualisierung bzw. Anpassung der Koordinaten des Referenzpunkts ein jeweiliges Koordinatenaktualisierung für alle mit den Multistations erfasste Punktwolken so erfolgen, dass diese aktualisiert in einem gemeinsamen Koordinatensystem vorliegen.

Die jeweilige Referenzierung der Punktwolken erfolgt erfindungsgemäss direkt auf einem für die Erfassung einer Punktwolke verwendeten Vermessungsgerät 1,11. Hierfür verfügt das Gerät 1,11 über eine entsprechende Referenzierungsfunktionalität.

Die Figuren 3a-c zeigen jeweils eine zumindest teilweise Rekonstruktion für das im Rahmen des erfindungsgemässen Objektvermessungsverfahrens vermessene Objekt 20, wobei die Rekonstruktion auf Scan- und Einzelpunktmessdaten gemäss den Ausführungen zu Fig. 1 beruht und die Objektbereiche 21-23 jeweils als Flächen 21'-23' repräsentiert sind.

Fig. 3a zeigt eine Rekonstruktion der Objektflächen 21,22. Dieses Modell basiert auf der mittels Scannen erfassten Punktwolke 20a und den mittels Einzelpunktbestimmen hochgenau vermessenen einzelnen, den Objektflächen 21,22 zugeordneten Objektpunkten 24. Durch die vermessenen Einzelpunkte 24 sind die Punktwolke 20a bezüglich deren Lage und Form angepasst und daraus entsprechende Objektflächen 21',22' abgeleitet worden. Ausserdem sind auf Basis der Einzelpunkte 24 entsprechende Kanten 26 und Grenzen des Objekts 20 präzise bestimmt worden, wodurch eine genaue Oberflächeninformation für die Objektbereiche 21,22 vorliegt.

Fig. 3b zeigt eine Rekonstruktion der Objektfläche 23. Dieses Modell für die Objektfläche 23 basiert auf der mittels Scannen erfassten Punktwolke 20b und den mittels Einzelpunktbestimmen hochgenau vermessenen einzelnen, der Objektflächen 23 zugeordneten Objektpunkten 25.

Fig. 3c zeigt eine Rekonstruktion des Objekts 20. Dieses Abbild für das Objekt 20 kann z.B. basierend auf den mittels Scannen erfassten Punktwolken 20a-b und den mittels Einzelpunktmessen hochgenau vermessenen einzelnen, den Objektflächen 21-23 zugeordneten Objektpunkten 24,25 erstellt werden. Alternativ kann das Modell abgeleitet sein aus den beiden Teilmodellen gemäss Fig. 3a-b für die Teilbereiche 21,22,23 des Objekts 20.

Die Punktwolken bzw. die Modelle sind hierfür gegenseitig derart referenziert, dass die Punktwolken (bzw. die jeweiligen Objektbereiche) in einem gemeinsamen Koordinatensystem vorliegen, d.h. deren Positionen, Orientierungen und/oder Skalierungen in dem gemeinsamen Koordinatensystem bestimmt sind.

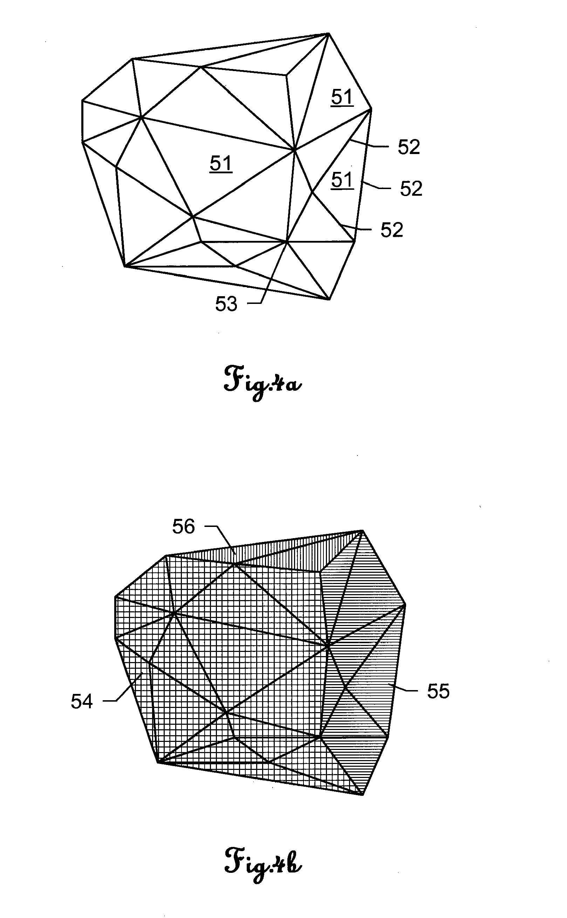

Fig. 4a zeigt ein "vermaschtes" Modell für ein Objekt, d.h. ein Modell bestehend aus miteinander verknüpften, dem Objekt zugeordneten Linien, so dass das daraus resultierende Modell die Gestalt eines Netzes mit einzelnen Maschen erhält. Das Modell ist abgeleitet auf Basis eines erfindungsgemässen kontinuierlichen Scannens und Einzelpunktmessens für bestimmte Punkte auf dem Objekt.

Durch Scannen des Objekts sind einzelne Oberflächenbereiche des Objekts flächig erfasst und als zugehörige modellierte Flächensegmente 51 in das Modell so eingefügt worden, dass durch eine Zusammensetzung der einzelnen Flächen 51 ein Gesamtmodell für das Objekt vorliegt. Für jeden Oberflächenbereich wird dabei eine den Bereich und eventuell weitere Bereiche repräsentierende und die somit jeweilige Oberflächeninformation bereitstellende Punktwolke erzeugt.

Die Segmente 51 sind durch jeweilige Grenzlinien 52 voneinander abgegrenzt. Diese Grenzlinien 52 sind basierend auf jeweiligen Einzelpunktmessungen für einzelne Punkte auf dem Objekt bestimmt, wobei die Lage der einzelnen Grenzlinien 52 durch Positionen von Einzelpunkten, die beispielsweise einen Anfangs- und Endpunkt der jeweiligen Grenzlinie 52 definieren, berechnet wurden. Insbesondere können für die Bestimmung der Grenzlinien 52 beliebige Punkte oder signifikante Punkte, z.B. Punkte entlang einer Kante des zu vermessenden Körpers, auf dem Objekt vermessen und für die (mathematische) Rekonstruktion des Objekts berücksichtigt werden. Die Grenzlinien 52 sind also aus den Lagen von einzeln vermessenen Punkten abgeleitet.

Zudem ergeben sich bei der Erfassung des Objekts typischerweise Bereiche bzw. Punkte, die aufgrund von gegebenen Messanforderungen sehr genau zu bestimmen sind. Für solche Bereiche oder Punkte können dann als fixe anzunehmende (unveränderliche) Knotenpunkte 53 mit festen Positionen bestimmt werden, an denen die Grenzlinien 52 orientiert sind bzw. an die die Lagen der Grenzlinien 52 und/oder Flächen 51 angepasst werden. Zur Bestimmung derartiger Knotenpunke 53 werden insbesondere mehrere Einzelpunktmessungen und eine Mittelwertbildung auf Basis dieser mehreren Einzelpunktmessungen ausgeführt. Als fixe Knotenpunkte 53 werden z.B. Kanten oder Ecken des Objekts vermessen.

Fig. 4b zeigt das Modell gemäss Fig. 4a, wobei die Flächen 51 des Modells einer jeweiligen Aufstellposition des Vermessungsgeräts, mit dem die Objektbereiche abgetastet wurden, zugeordnet sind. Die durch das karierte Muster repräsentierte Fläche 54 umfasst dabei diejenigen Objektbereiche, die aus einer ersten Perspektive einer ersten Aufstellung des Geräts erfasst wurden. Aus einer zweiten Perspektive (mit demselben oder einem zusätzlichen Vermessungsgerät) wurde die horizontal liniert markierten Flächen 55 erfasst. Und die vertikal linierten Flächen 56 wurden aus einer dritten Aufstellposition entsprechend gescannt.

In den jeweiligen Aufstellungen wurden zudem mehrere Einzelpunkte derart vermessen und bestimmt, dass die Grenzlinien 52 für das Modell exakt definierbar sind, um die Lage der aus den Punktwolken erzeugbaren Flächen 51 bezüglich deren Lagegenauigkeit zu optimieren. Zur Definition der Grenzlinien 52 genügt in diesem Zusammenhang die Vermessung von zumindest einem der jeweiligen Grenzlinie zuordenbaren Punkt, insbesondere von zwei Punkten.

Alternativ oder zusätzlich kann ein Einzelpunkt z.B. im Zentrum einer der Flächen 51 vermessen werden und auf Basis der damit bestimmten Position die Lage der zugehörigen Fläche angepasst werden. Die Grenzlinien ergeben sich dabei z.B. durch den Schnitt zweier oder mehrere derartiger Flächen.

Zur Erstellung des Modells wird eine gegenseitige Referenzierung der in der jeweiligen Aufstellung erfassten Punktwolken ausgeführt, damit die für das Modell herangezogenen Punktwolken in einem gemeinsamen Koordinatensystem vorliegen und daraus ein wirklichkeitsgetreues Modell erstellt werden kann.

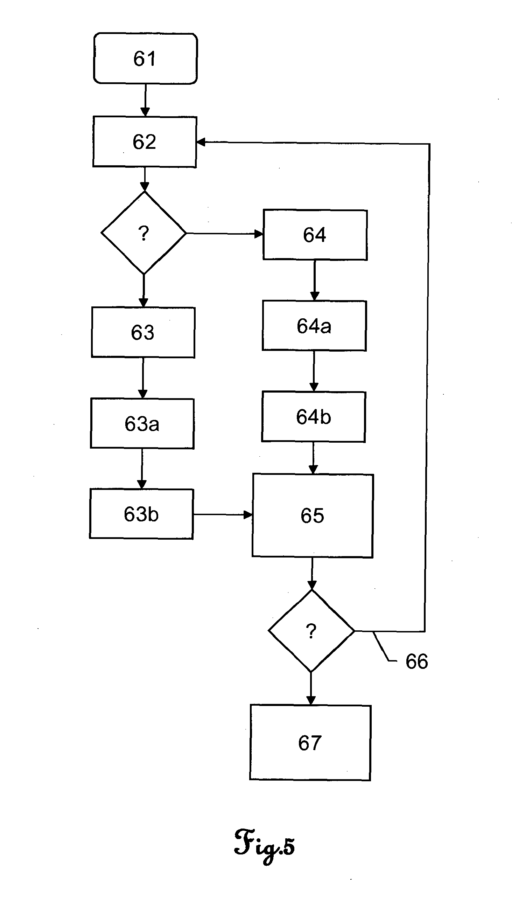

Fig. 5 zeigt ein Ablaufdiagramm für einen Vermessungsprozess zur Volumenbestimmung 61 für ein Objekt gemäss der Erfindung.

Zunächst wird hierfür eine Totalstation mit einer Scan- und Einzelpunktbestimmungsfunktionalität an einem ersten Aufstellpunkt aufgestellt 62 und auf das zu vermessende Objekt, z.B. ein Gebäude, grob ausgerichtet.

Nachfolgend werden entweder zunächst ein Abtasten der Objektoberfläche 63 und danach ein Einzelpunktbestimmen für einzelne Objektpunkte 64 oder die Schritte in umgekehrter Reihenfolge ausgeführt.

Für das Abtasten 63 der Objektfläche wird ein Scanbereich definiert 63a (entsprechend des zu erfassenden Bereichs auf dem Objekt) und danach das Sannen in Abhängigkeit des definierten Bereichs durch kontinuierliches Bewegen der Messstrahlung, z.B. mäanderförmig, innerhalb des Scanbereichs und gleichzeitiges Erfassen von Winkel- und Entfernungswerten ausgeführt 63b. So wird eine erste Punktwolke für den abgetasteten Bereich erzeugt.

Für das Einzelpunktmessen 64 wird die Messstrahlung - im Gegensatz zum Scannen - präzise auf einen zu vermessenden, einzelnen Objektpunkt des Objekts ausgerichtet 64a und dieser Punkt bei gleich bleibender, fester Ausrichtung der Messstrahlung geodätisch genau vermessen und eine Position des Punkts bestimmt 64b, indem in dieser Messstrahlausrichtung ein Entfernungswert und ein Horizontal- und Vertikalwinkel bestimmt werden. Das Einzelpunktmessen wird hierbei zu Gebäudekanten ausgeführt um diese exakt zu bestimmen. Alternativ oder auch zusätzlich kann das Einzelpunktbestimmen 64 mittels Empfangen von GNSS-Positionssignalen und berechnen einer Position des Punkts aus diesen Signalen erfolgen. Hierzu wird beispielsweise ein Vermessungsstab mit einem entsprechenden GNSS-Empfanger an dem Punkt platziert und horizontal ausgerichtet (z.B. mittels einer Horizontierungslibelle) und in dieser Ausrichtung die Position für den Empfänger und die Spitze des Vermessungsstabs (also für den Punkt) abgeleitet. Diese Position kann dann zur weiteren Objektbestimmung bzw. zur Aktualisierung der Oberflächeninformation an das Vermessungsgerät übertragen und dort weiterverarbeitet werden.

Durch Heranziehen der genau vermessenen Objektpunkte wird die durch die Punktwolke repräsentierte Oberflächeninformation aktualisiert, insbesondere hinsichtlich der Lage der Punktwolke und einer aus der Punktwolke ableitbaren Objektfläche. Aus der durch das Abtasten erzeugten Punktwolke und den zusätzlich vermessenen Objektpunkten wird somit eine erste Oberfläche für das Objekt abgeleitet 65, deren Lage durch Verrechnung der Einzelpunktpositionen genauer bestimmt ist.

In Abhängigkeit davon, ob durch die bestimmte erste Oberfläche für das Objekt eine Volumenberechung möglich ist bzw. mit hinreichender Genauigkeit ausgeführt werden kann, kann die Totalstation an einem zweiten Aufstellpunkt aufgestellt 66 und die Schritte 63-65 in dieser Aufstellung wiederholt ausgeführt werden, wobei das Objekt aus einer zweiten Perspektive vermessen wird. Nach dem Vermessen in dieser zweiten Aufstellpunkt werden die erzeugten Punktwolken derart referenziert, dass diese in einem gemeinsamen Koordinatensystem vorliegen und durch deren Zusammenführung eine erweiterte Rekonstruktion des Objekts (mit mehreren Objektoberflächen, die aus unterschiedlichen Perspektiven erfasst wurden) ausgeführt werden kann.

In einem letzten Prozessschritt 67 werden aus der Gesamtheit der durchgeführten Scans und der vermessenen Einzelpunkte eine Oberfläche für das Objekt und zudem ein Volumen für das Objekt berechnet. Dies kann beispielsweise erfolgen, indem aus jeder Punktwolke eine Fläche approximiert und diese mittels der zugehörigen Einzelpunkte lagemässig angepasst wird. Die Flächen werden dann so zusammengefügt, dass sich aus den einzelnen Flächen eine zusammenhängende, die Oberfläche repräsentierende Fläche ergibt, aus deren Form und Ausdehnung der Volumeninhalt für das Objekt ableitbar ist.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zur geodätischen Zielvermessung und mit Vermessungsgeräten, insbesondere Totalstationen oder Multistations, des Stands der Technik kombiniert werden.

## Patentansprüche

1. Verfahren zur Vermessung eines Objekts (20) für und mit einem geodätischen Vermessungsgerät (1,11), insbesondere Totalstation, mit
• einem Ableiten einer Oberflächeninformation zumindest für einen Objektbereich (21-23,54-56), insbesondere bezüglich einer Form und/oder räumlichen Ausdehnung des Objekts (20), und
• wenigstens einem geodätisch genauen Einzelpunktbestimmen für einen Objektpunkt (24,25) innerhalb des Objektbereichs (21-23,54-56), wobei eine Position des mindestens einen Objektpunkts (24,25) geodätisch genau bestimmt wird,
**gekennzeichnet durch**
• ein Scannen zum Ableiten der Oberflächeninformation, mit
□ einem objektpunktunabhängigen Abtasten des Objektbereichs (21-23,54-56) **durch** fortlaufendes Ausrichtungsändern der Messstrahlung (3),
□ einem Bestimmen von einer jeweiligen Entfernung und von einer jeweiligen Ausrichtung der für die Entfernungsmessung emittierten Messstrahlung (3) für Scanpunkte (41) innerhalb des Objektbereichs (21-23,54-56), insbesondere in einer vorbestimmten Scanpunktauflösung, und
□ einem Erzeugen einer die Oberflächeninformation repräsentierenden und die Scanpunkte (41) aufweisenden Punktwolke (20a-c), und
• ein Aktualisieren der Oberflächeninformation basierend auf der bestimmten Position des mindestens einen Objektpunkts (24,25).

2. Verfahren nach Anspruch 1,
**dadurch gekennzeichnet, dass**
im Rahmen des Einzelpunktbestimmens
• eine Messstrahlung (3) präzise auf den mindestens einen Objektpunkt (24,25) ausgerichtet wird und bei der Ausrichtung der Messstrahlung (3) auf den mindestens einen Objektpunkt (24,25) vermittels der Messstrahlung (3) die Position des mindestens einen Objektpunkts (24,25) geodätisch genau bestimmt wird, insbesondere durch Ausrichtungsbestimmen für die Messstrahlung (3) und Entfernungsmessen vermittels der Messstrahlung (3),
oder
• die Position des mindestens einen Objektpunkts (24,25) mittels Erfassen von GNSS-Signalen und Erzeugen von GNSS-Positionsinformation abgeleitet wird, insbesondere wobei eine GNSS-Empfangseinheit in bekannter relativer Position zu dem Objektpunkt (24,25) positioniert und die GNSS-Positionsinformation durch die GNSS-Empfangseinheit erzeugt werden.

3. Verfahren nach Anspruch 1 oder 2,
**dadurch gekennzeichnet, dass**
• im Rahmen des Aktualisierens der Oberflächeninformation die Oberfläche und/oder ein Volumen für den Objektbereich (21-23,54-56), insbesondere für das Objekt (20), bestimmt wird, wobei die bestimmte Position des mindestens einen Objektpunkts (24,25) zusammen mit der Punktwolke (20a-c) verarbeitet wird, insbesondere wobei ein Oberflächenwert bzw. ein Volumenwert berechnet wird, und/oder
• die Oberflächeninformation eine Lage und/oder zumindest teilweise eine räumliche Ausdehnung des Objekts (20) angibt.

4. Verfahren nach einem der Ansprüche 1 bis 3,
**dadurch gekennzeichnet, dass**
• die Punktwolke (20a-c) derart verarbeitet wird, dass auf Basis der Positionen der Scanpunkte (41) eine zusammenhängende Fläche (21',22',23',51) approximiert wird, wobei die Fläche (21',22',23',51) die Oberflächeninformation repräsentiert, insbesondere wobei die Scanpunkte (41) in der Fläche (21',22',23',51) liegen, und/oder
• das Objektvermessungsverfahren zeitlich versetzt mehrmals ausgeführt wird, wobei die jeweils aktuell erzeugte Oberflächeninformation für das Objekt (20) mit zumindest einer vorangehend erzeugten Oberflächeninformation verglichen wird, insbesondere wobei eine bei der Oberflächen- und/oder Volumenbestimmung bestimmte Oberflächen- und/oder Volumeneigenschaft jeweils entsprechend verglichen wird.

5. Verfahren nach einem der Ansprüche 1 bis 4,
**dadurch gekennzeichnet, dass**
mindestens ein weiteres Ableiten einer weiteren Oberflächeninformation für einen weiteren Objektbereich (23) des Objekts (20) erfolgt, wobei die weitere Oberflächeninformation basierend auf einem Erzeugen einer weiteren Punktwolke (20b) durch Scannen des weiteren Objektbereichs (23) abgeleitet wird, insbesondere wobei die eine weitere Oberflächeninformation für den weiteren Objektbereich (23) basierend auf einem weiteren vermessenen Objektpunkt (25) aktualisiert wird, insbesondere wobei der eine weitere vermessene Objektpunkt (25) durch mindestens ein weiteres geodätisch genaues Einzelpunktbestimmen für den wenigstens einen weiteren Objektpunkt (25) des weiteren Objektbereichs (23) bestimmt ist.

6. Verfahren nach Anspruch 5,
**dadurch gekennzeichnet, dass**
• das Scannen der Objektbereiche (21-23,54-56) und insbesondere das Einzelpunktbestimmen für die Objektpunkte (24,25) aus unterschiedlichen Perspektiven, insbesondere in unterschiedlichen Aufstellungen (4,14) des geodätischen Vermessungsgeräts, relativ zu dem Objekt (20) erfolgt,
und/oder
• die Punktwolke (20a) und die eine weitere Punktwolke (20b) gemeinsam die Oberflächeninformation repräsentieren, insbesondere wobei das Aktualisieren der Oberflächeninformation für das Objekt (20) basierend auf den Punktwolken (20a-c) sowie auf dem mindestens einen Objektpunkt (24) und dem wenigstens einen weiteren Objektpunkt (25) erfolgt.

7. Verfahren nach Anspruch 5 oder 6,
**dadurch gekennzeichnet, dass**
ein derartiges Referenzieren der einen weiteren Punktwolke (20b) und insbesondere des wenigstens einen weiteren Objektpunkts (25) erfolgt, dass deren Lage in einem Objektkoordinatensystem bestimmt ist, insbesondere wobei durch das Referenzieren die Punktwolke (20a) und die weitere Punktwolke (20b) sowie insbesondere der mindestens eine Objektpunkt (24) und der wenigstens eine weitere Objektpunkt (25) in dem Objektkoordinatensystem gemeinsam vorliegen.

8. Verfahren nach Anspruch 7,
**dadurch gekennzeichnet, dass**
mindestens ein Referenzpunkt (28) einen Bezug des Objektkoordinatensystems zu einem äusseren Koordinatensystem für das Referenzieren bereitstellt, wobei das Referenzieren durch ein präzises Einzelpunktbestimmen für den mindestens einem Referenzpunkt (28) erfolgt, insbesondere wobei in der Aufstellung (4,14), in der eine der Punktwolken (20a-c) für das Objekt (20) erfasst wird, der mindestens eine Referenzpunkt (28) vermessen wird.

9. Verfahren nach einem der Ansprüche 1 bis 8,
**gekennzeichnet durch**
• ein Erzeugen eines Objektmodells zumindest für den einen Objektbereich (21-23,54-56) in Abhängigkeit von der Oberflächeninformation, insbesondere von der Punktwolke (20a-c), und von der bestimmten Position des mindestens einen Objektpunkts (24,25) und/oder
• ein Filtern der Scanpunkte (41) der Punktwolke (20a-c) in Abhängigkeit von einem Erfüllen eines definierten Berücksichtigungskriteriums, insbesondere hinsichtlich einer Lage der Scanpunkte (41) innerhalb eines Sollmessbereichs, wobei die Scanpunkte (41) in Abhängigkeit von dem Filtern für das Aktualisieren der Oberflächeninformation berücksichtigt werden.

10. Verfahren nach einem der Ansprüche 1 bis 9,
**dadurch gekennzeichnet, dass**
• im Rahmen des Einzelpunktbestimmens ein Objektpunkt (24,25) als Stützungspunkt für den Objektbereich (21-23,54-56) vermessen und dessen Position bestimmt wird, wobei der Stützungspunkt berücksichtigt wird zur Definition des Objektbereichs (21-23,54-56), insbesondere zur Definition der Oberfläche im Rahmen des Aktualisierens der Oberflächeninformation, und/oder
• im Rahmen des Objektvermessungsverfahrens eine atmosphärische Zustandsinformation erfasst wird und/oder eine geometrische Messinformation definiert ist, insbesondere meteorologische Daten und/oder Messachsenfehler, wobei
□ bei dem Bestimmen der Entfernung für die jeweiligen Scanpunkte (41) und/oder bei dem Bestimmen der Entfernung zu dem mindestens einen Objektpunkt (24,25) die atmosphärische Zustandsinformation und/oder geometrische Messinformation verarbeitet wird und basierend darauf eine Entfernungskorrektur für das Bestimmen der jeweiligen Entfernung erfolgt und/oder
□ die im Rahmen des Scannens bestimmten Scanpunkte (41) bezüglich deren Position, insbesondere die Lage der Punktwolke (20a-c) in dem Objektkoordinatensystem, basierend auf den atmosphärischen Zustandsinformationen und/oder geometrische Messinformation angepasst werden.

11. Verfahren nach einem der Ansprüche 1 bis 10,
**dadurch gekennzeichnet, dass**
das Verfahren durch
• das geodätische Vermessungsgerät (1,11) ausgeführt wird, wobei das Vermessungsgerät (1,11) zumindest aufweist
□ eine Scanfunktionalität zum scannenden Erfassen der Scanpunkte und Erzeugen der Punktwolke (20a-c) und
□ eine Einzelpunktbestimmungsfunktionalität zum hochpräzisen Positionsbestimmen für den mindestens einen Objektpunkt (24,25), insbesondere wobei das geodätische Vermessungsgerät (1,11) nach Anspruch 13 oder 14 ausgebildet ist, beziehungsweise
• das System nach Anspruch 14 ausgeführt wird.

12. Geodätisches Vermessungsgerät (1,11), insbesondere Totalstation, mit
• einer eine Schwenkachse definierenden Basis,
• einem auf der Basis angeordneten, um die Schwenkachse relativ zur Basis schwenkbaren Aufbau, wobei der Aufbau eine im wesentlichen orthogonal zur Schwenkachse stehende Kippachse definiert,
• einer Anzieleinheit, insbesondere Ziel-Fernrohr, wobei die Anzieleinheit um die Kippachse relativ zum Aufbau schwenkbar angeordnet ist und eine Emissionseinheit mit einer Strahlquelle zur Erzeugung und Emission einer Messstrahlung (3) aufweist,
• einer Entfernungsmessfunktionalität zur Messung von Entfernungen zu Punkten (24,25,41),
• einer Winkelmessfunktionalität zur Messung einer Ausrichtung der Messstrahlung (3),
• einer Steuerungs- und Verarbeitungseinheit zur Datenverarbeitung und zur Steuerung des Vermessungsgeräts (1,11) und
• einer Einzelpunktbestimmungsfunktionalität, bei deren Ausführung gesteuert durch die Steuerungs- und Verarbeitungseinheit eine Position mindestens eines Objektpunkts (24,25) innerhalb wenigstens eines Objektbereichs (21-23,54-56) geodätisch genau bestimmt wird,
**gekennzeichnet durch**
• eine Scanfunktionalität zum Ableiten einer Oberflächeninformation zumindest für den Objektbereich (21-23,54-56), wobei bei Ausführung der Scanfunktionalität gesteuert **durch** die Steuerungs- und Verarbeitungseinheit erfolgen
□ ein objektpunktunabhängiges Abtasten des Objektbereichs (21-23,54-56) **durch** fortlaufendes Ausrichtungsändern der Messstrahlung (3),
□ ein Bestimmen von einer jeweiligen Entfernung und einer jeweiligen Ausrichtung der für die Entfernungsmessung emittierten Messstrahlung (3) für Scanpunkte (41) innerhalb des Objektbereichs (21-23,54-56), insbesondere in einer vorbestimmten Scanpunktauflösung, und
□ ein Erzeugen einer die Oberflächeninformation repräsentierenden und die Scanpunkte (41) aufweisenden Punktwolke (20a-c), und
• eine Objektbestimmungsfunktionalität, bei deren Ausführung gesteuert **durch** die Steuerungs- und Verarbeitungseinheit die Oberflächeninformation zumindest für den einen Objektbereich (21-23,54-56), insbesondere für das Objekt (20), basierend auf einer **durch** die Einzelpunktbestimmungsfunktionalität bestimmten Position des mindestens einen Objektpunkts (24,25) aktualisiert wird,
insbesondere wobei die Steuerungs- und Verarbeitungseinheit derart konfiguriert ist, dass ein Verfahren nach einem der Ansprüche 1 bis 11 ausführbar ist.

13. Geodätisches Vermessungsgerät (1,11) nach Anspruch 12,
**dadurch gekennzeichnet, dass**
bei Ausführung der Einzelpunktbestimmungsfunktionalität
• ein hochpräzises Ausrichten der Messstrahlung (3) auf den mindestens einen Objektpunkt (24,25) innerhalb des Objektbereichs (21-23,54-56) erfolgt und
• bei der Ausrichtung der Messstrahlung (3) auf den mindestens einen Objektpunkt (24,25) vermittels der Messstrahlung (3) die Position des mindestens einen Objektpunkts (24,25) geodätisch genau bestimmt wird, insbesondere durch Ausrichtungsbestimmen für die Messstrahlung (3) und Entfernungsmessen vermittels der Messstrahlung (3).

14. System aus einem geodätischen Vermessungsgerät (1,11) nach Anspruch 12 oder 13 und einer GNSS-Empfangseinheit, wobei die GNSS-Empfangseinheit
• zum Empfang von GNSS-Signalen und Erzeugen von GNSS-Positionsinformation aus den GNSS-Signalen ausgebildet ist,
• relativ zu dem geodätischen Vermessungsgerät (1,11) beweglich positionierbar ist und
• derart ausgebildet ist, dass die GNSS-Positionsinformation zu dem geodätischen Vermessungsgerät (1,11) übertragbar ist, insbesondere wobei das geodätischen Vermessungsgerät (1,11) eine GNSS-Datenempfangseinheit aufweist,
**dadurch gekennzeichnet, dass**
bei Ausführung der Einzelpunktbestimmungsfunktionalität das Bestimmen der Position des mindestens einen Objektpunkts (24,25) basierend auf mittels der GNSS-Empfangseinheit erzeugter GNSS-Positionsinformation erfolgt, wobei die GNSS-Empfangseinheit in bekannter relativer Position bezüglich des Objektpunkts (24,25) vorliegt.

15. Computerprogrammprodukt mit Programmcode, der auf einem maschinenlesbaren Träger gespeichert ist,
• zur Steuerung des Scannens und des Einzelpunktbestimmens und
• zur Durchführung des Aktualisierens der Oberflächeninformation
des Verfahrens nach einem der Ansprüche 1 bis 11, insbesondere wenn das Programm auf einer als Steuerungs- und Verarbeitungseinheit eines Vermessungsgeräts (1,11) nach einem der Ansprüche 12 oder 13 bzw. eines Systems nach Anspruch 14 ausgebildeten elektronischen Datenverarbeitungseinheit ausgeführt wird.

## Claims

1. Method for surveying an object (20) for and using a geodetic surveying device (1, 11), in particular a total station, having
• a derivation of an item of surface information at least for one object region (21-23, 54-56), in particular with respect to a shape and/or spatial extension of the object (20), and
• at least one geodetically precise single point determination for an object point (24, 25) within the object region (21-23, 54-56), wherein a position of the at least one object point (24, 25) is determined geodetically precisely,
**characterized by**
• a scan to derive the item of surface information, having
□ object-point-independent scanning of the object region (21-23, 54-56) by progressive alignment changes of the measuring radiation (3),
□ a determination of a respective distance and a respective alignment of the measuring radiation (3) emitted for the distance measurement for scanning points (41) within the object region (21-23, 54-56), in particular in a predetermined scanning point resolution, and
□ a generation of a point cloud (20a-c), which represents the item of surface information and has the scanning points (41), and
• an update of the item of surface information based on the determined position of the at least one object point (24, 25).

2. Method according to Claim 1,
**characterized in that**
in the scope of the single point determination
• measuring radiation (3) is aligned precisely on the at least one object point (24, 25) and upon the alignment of the measuring radiation (3) on the at least one object point (24, 25), the position of the at least one object point (24, 25) is determined geodetically precisely by means of the measuring radiation (3), in particular by alignment determination for the measuring radiation (3) and distance measurement by means of the measuring radiation (3),
or
• the position of the at least one object point (24, 25) is derived by means of acquisition of GNSS signals and generation of GNSS position information, in particular wherein a GNSS receiving unit is positioned in a known relative position to the object point (24, 25) and the GNSS position information is generated by the GNSS receiving unit.

3. Method according to Claim 1 or 2,
**characterized in that**
• in the scope of the updating of the item of surface information, the surface and/or a volume for the object region (21-23, 54-56), in particular for the object (20), is determined, wherein the determined position of the at least one object point (24, 25) is processed together with the point cloud (20a-c), in particular wherein a surface value or a volume value is calculated, and/or
• the item of surface information specifies a location and/or at least partially a spatial extension of the object (20).

4. Method according to any one of Claims 1 to 3,
**characterized in that**
• the point cloud (20a-c) is processed in such a manner that, based on the positions of the scanning points (41), a coherent area (21', 22', 23', 51) is approximated, wherein the area (21', 22', 23', 51) represents the item of surface information, in particular wherein the scanning points (41) lie in the area (21', 22', 23', 51),
and/or
• the object surveying method is executed offset in time multiple times, wherein the respective present generated item of surface information for the object (20) is compared to at least one previously generated item of surface information, in particular wherein a surface and/or volume property determined during the surface and/or volume determination is respectively compared accordingly.

5. Method according to any one of Claims 1 to 4,
**characterized in that**
at least one further derivation of a further item of surface information for a further object region (23) of the object (20) is performed, wherein the further item of surface information is derived based on a generation of a further point cloud (20b) by scanning the further object region (23), in particular wherein the one further item of surface information for the further object region (23) is updated based on a further surveyed object point (25), in particular wherein the one further surveyed object point (25) is determined by at least one further geodetically precise single point determination for the at least one further object point (25) of the further object region (23).

6. Method according to Claim 5,
**characterized in that**
• the scanning of the object regions (21-23, 54-56) and in particular the single point determination for the object points (24, 25) are performed from different perspectives, in particular in different setup positions (4, 14) of the geodetic surveying device, in relation to the object (20),
and/or
• the point cloud (20a) and the one further point cloud (20b) jointly represent the item of surface information, in particular wherein the update of the item of surface information for the object (20) is performed based on the point clouds (20a-c) and on the at least one object point (24) and the at least one further object point (25).

7. Method according to Claim 5 or 6,
**characterized in that**
referencing of the one further point cloud (20b) and in particular the at least one further object point (25) is performed in such a manner that the location thereof in an object coordinate system is determined, in particular wherein, by way of the referencing, the point cloud (20a) and the further point cloud (20b) and in particular the at least one object point (24) and the at least one further object point (25) are provided jointly in the object coordinate system.

8. Method according to Claim 7,
**characterized in that**
at least one reference point (28) provides a reference of the object coordinate system to an external coordinate system for the referencing, wherein the referencing is performed by precise single point determination for the at least one reference point (28), in particular wherein the at least one reference point (28) is surveyed in the setup position (4, 14), in which one of the point clouds (20a-c) for the object (20) is acquired.

9. Method according to any one of Claims 1 to 8,
**characterized by**
• generation of an object model at least for the one object region (21-23, 54-56) as a function of the item of surface information, in particular of the point cloud (20a-c), and of the determined position of the at least one object point (24, 25) and/or
• filtering of the scanning points (41) of the point cloud (20a-c) as a function of a fulfillment of a defined consideration criterion, in particular with respect to a location of the scanning points (41) within an intended measuring region, wherein the scanning points (41) are considered as a function of the filtering for the update of the item of surface information.

10. Method according to any one of Claims 1 to 9,
**characterized in that**
• in the scope of the single point determination, an object point (24, 25) is surveyed as a support point for the object region (21-23, 54-56) and the position thereof is determined, wherein the support point is considered for the definition of the object region (21-23, 54-56), in particular for the definition of the surface in the scope of the update of the item of surface information,
and/or
• in the scope of the object surveying method, an item of atmospheric state information is acquired and/or an item of geometric measuring information is defined, in particular meteorological data and/or measuring axis errors, wherein
_{°} during the determination of the distance for the respective scanning points (41) and/or during the determination of the distance to the at least one object point (24, 25), the item of atmospheric state information and/or geometric measuring information is processed and, based thereon, a distance correction for the determination of the respective distance is performed and/or
□ the scanning points (41) determined in the scope of the scanning are adapted with respect to the position thereof, in particular the location of the point cloud (20a-c) in the object coordinate system, based on the item of atmospheric state information and/or geometric measuring information.

11. Method according to any one of Claims 1 to 10,
**characterized in that**
the method
• is executed by the geodetic surveying device (1, 11), wherein the surveying device (1, 11) at least has
□ a scanning functionality for the scanning acquisition of the scanning points and generation of the point cloud (20a-c) and
□ a single point determination functionality for the high-precision position determination for the at least one object point (24, 25),
in particular wherein the geodetic surveying device (1, 11) is implemented according to Claim 13 or 14, or
• the system is embodied according to Claim 14.

12. Geodetic surveying device (1, 11), in particular a total station, having
• a base which defines a pivot axis,
• a structure, which is arranged on the base and is pivotable about the pivot axis in relation to the base, wherein the structure defines a tilt axis standing substantially orthogonally to the pivot axis,
• a targeting unit, in particular a telescopic sight, wherein the targeting unit is arranged so it is pivotable about the tilt axis in relation to the structure and has an emission unit having a radiation source for generating and emitting measuring radiation (3),
• a distance measuring functionality for measuring distances to points (24, 25, 41),
• an angle measuring functionality for measuring an alignment of the measuring radiation (3),
• a control and processing unit for data processing and for controlling the surveying device (1, 11), and
• a single point determination functionality, upon the execution of which, controlled by the control and processing unit, a position of at least one object point (24, 25) within at least one object region (21-23, 54-56) is determined geodetically precisely,
**characterized by**
• a scanning functionality for deriving an item of surface information at least for the object region (21-23, 54-56), wherein, upon execution of the scanning functionality, controlled by the control and processing unit
□ object-point-independent scanning of the object region (21-23, 54-56) by progressive alignment changes of the measuring radiation (3),
□ a determination of a respective distance and a respective alignment of the measuring radiation (3) emitted for the distance measurement for scanning points (41) within the object region (21-23, 54-56), in particular in a predetermined scanning point resolution, and
□ a generation of a point cloud (20a-c), which represents the item of surface information and has the scanning points (41), are performed, and
• an object determination functionality, upon the execution of which, controlled by the control and processing unit, the item of surface information is updated at least for the one object region (21-23, 54-56), in particular for the object (20), based on a position of the at least one object point (24, 25) determined by the single point determination functionality,
in particular wherein the control and processing unit is configured in such a manner that a method according to any one of Claims 1 to 11 can be executed.

13. Geodetic surveying device (1, 11) according to Claim 12,
**characterized in that**
upon execution of the single point determination functionality
• a high-precision alignment of the measuring radiation (3) on the at least one object point (24, 25) within the object region (21-23, 54-56) is performed, and
• upon the alignment of the measuring radiation (3) on the at least one object point (24, 25) by means of the measuring radiation (3), the position of the at least one object point (24, 25) is determined geodetically precisely, in particular by alignment determination for the measuring radiation (3) and distance measurement by means of the measuring radiation (3).

14. System composed of a geodetic surveying device (1, 11) according to Claim 12 or 13 and a GNSS receiving unit, wherein the GNSS receiving unit
• is implemented to receive GNSS signals and generate GNSS position information from the GNSS signals,
• is movably positionable in relation to the geodetic surveying device (1, 11), and
• is implemented in such a manner that the GNSS position information is transmittable to the geodetic surveying device (1, 11), in particular wherein the geodetic surveying device (1, 11) has a GNSS data receiving unit,
**characterized in that**
upon execution of the single point determination functionality, the determination of the position of the at least one object point (24, 25) is performed based on GNSS position information generated by means of the GNSS receiving unit, wherein the GNSS receiving unit is provided in a known relative position with respect to the object point (24, 25).

15. Computer program product having program code, which is stored on a machine-readable carrier,
• for controlling the scanning and the single point determination and
• for carrying out the update of the item of surface information
of the method according to any one of Claims 1 to 11, in particular when the program is executed on an electronic data processing unit, which is implemented as a control and processing unit of a surveying device (1, 11) according to either of Claims 12 and 13 or of a system according to Claim 14, respectively.

## Revendications

1. Procédé pour mesurer un objet (20) pour et avec un appareil de mesure géodésique (1, 11), en particulier une station totale, avec
• une dérivation d'une information de surface au moins pour une zone d'objet (21-23, 54-56), en particulier pour ce qui est d'une forme et/ou d'une extension dans l'espace de l'objet (20), et
• au moins une détermination d'un seul point précis géodésique pour un point d'objet (24, 25) à l'intérieur de la zone d'objet (21-23, 54-56), cependant qu'une position du point d'objet qui existe au moins (24, 25) est déterminée précisément géodésiquement,
**caractérisé par**
• un balayage pour dériver l'information de surface avec
□ un balayage indépendant du point d'objet de la zone de l'objet (21-23, 54-56) par modification continue de l'orientation du faisceau de mesure (3),
□ une détermination d'une distance respective et d'une orientation respective du faisceau de mesure (3) émis pour la mesure de la distance pour des points de balayage (41) à l'intérieur de la zone de l'objet (21-23, 54-56), en particulier dans une résolution prédéterminée des points de balayage, et
□ une production d'un nuage de points (20a-c) qui représente l'information de surface et qui présente les points de balayage (41) et
• une actualisation de l'information de surface sur la base de la position déterminée du point d'objet qui existe au moins (24, 25).

2. Procédé selon la revendication 1, **caractérisé en ce que**, dans le cadre de la détermination du point unique,
• un faisceau de mesure (3) est orienté précisément sur le point d'objet qui existe au moins (24, 25) et, lors de l'orientation du faisceau de mesure (3) sur le point d'objet qui existe au moins (24, 25), la position du point d'objet qui existe au moins (24, 25) est déterminée précisément géodésiquement au moyen du faisceau de mesure (3), en particulier par détermination de l'orientation pour le faisceau de mesure (3) et par mesure de la distance au moyen du faisceau de mesure (3)
ou
• la position du point d'objet qui existe au moins (24, 25) est dérivée par détection de signaux GNSS et production d'informations de position GNSS, en particulier cependant qu'une unité de réception GNSS est positionnée dans une position relative connue par rapport au point de l'objet (24, 25) et les informations de position GNSS sont produites par l'unité de réception GNSS.

3. Procédé selon la revendication 1 ou 2, **caractérisé en ce que**
• dans le cadre de l'actualisation de l'information de surface, la surface et/ou un volume est déterminé pour la zone de l'objet (21-23, 54-56), en particulier pour l'objet (20), cependant que la position déterminée du point d'objet qui existe au moins (24, 25) est traitée avec le nuage de points (20a-c), en particulier cependant qu'une valeur de surface ou une valeur de volume est calculée et/ou
• l'information de surface indique une position et/ou au moins partiellement une extension dans l'espace de l'objet (20).

4. Procédé selon l'une des revendications 1 à 3, **caractérisé en ce que**
• le nuage de points (20a-c) est traité de telle manière qu'une surface continue (21', 22', 23' 51) est approchée par approximation sur la base des positions des points de balayage (41), cependant que la surface (21', 22', 23' 51) représente l'information de surface, en particulier cependant que les points de balayage (41) se situent dans la surface (21', 22', 23' 51) et/ou
• le procédé de mesure de l'objet est réalisé plusieurs fois décalé dans le temps, cependant que l'information de surface produite respectivement actuellement pour l'objet (20) est comparée avec au moins une information de surface produite précédemment, en particulier cependant qu'une propriété de surface et/ou de volume déterminée lors de la détermination de la surface et/ou du volume est respectivement comparée de manière correspondante.

5. Procédé selon l'une des revendications 1 à 4, **caractérisé en ce qu'**au moins une autre dérivation d'une autre information de surface est réalisée pour une autre zone d'objet (23) de l'objet (20), cependant que l'autre information de surface est dérivée par balayage de l'autre zone d'objet (23) sur la base de la production d'un autre nuage de points (20b), en particulier cependant que l'autre information de surface pour l'autre zone d'objet (23) est actualisée sur la base d'un autre point d'objet mesuré (25), en particulier cependant que l'autre point d'objet mesuré (25) est déterminé par au moins une autre détermination de point unique précis géodésique pour l'autre point d'objet qui existe au moins (25) de l'autre zone d'objet (23).

6. Procédé selon la revendication 5, **caractérisé en ce que**
• le balayage des zones de l'objet (21-23, 54-56) et en particulier la détermination du point unique pour les points d'objet (24, 25) se fait à partir de différentes perspectives par rapport à l'objet (20), en particulier dans différentes implantations (4, 14) de l'appareil de mesure géodésique,
et/ou
• le nuage de points (20a) et l'autre nuage de points (20b) représentent conjointement l'information de surface, en particulier cependant que l'actualisation de l'information de surface pour l'objet (20) se fait sur la base des nuages de points (20a-c) ainsi que du point d'objet qui existe au moins (24) et de l'autre point d'objet qui existe au moins (25).

7. Procédé selon la revendication 5 ou 6, **caractérisé en ce qu'**un référencement de l'autre nuage de points (20b) et en particulier de l'autre point d'objet qui existe au moins (25) est réalisé de telle manière que leur position est déterminée dans un système de coordonnées de l'objet, en particulier cependant que le nuage de points (20a) et l'autre nuage de points (20b) ainsi que le point d'objet qui existe au moins (24) et l'autre point d'objet qui existe au moins (25) sont présents conjointement dans le système de coordonnées de l'objet par le référencement.

8. Procédé selon la revendication 7, **caractérisé en ce qu'**au moins un point de référence (28) met à disposition une référence du système de coordonnées de l'objet par rapport à un système extérieur de coordonnées pour le référencement, cependant que le référencement est effectué par une détermination précise de point unique pour le point de référence qui existe au moins (28), en particulier cependant que le point de référence qui existe au moins (28) est mesuré dans l'implantation (4, 14) dans laquelle l'un des nuages de points (20a-c) est saisi pour l'objet (20).

9. Procédé selon l'une des revendications 1 à 8, **caractérisé par**
• une production d'un modèle d'objet au moins pour la zone d'objet (21-23, 54-56) en fonction de l'information de surface, en particulier du nuage de points (20a-c) et de la position déterminée du point d'objet qui existe au moins (24, 25) et/ou
• un filtrage des points de balayage (41) du nuage de points (20a-c) en fonction du fait qu'un critère défini de prise en compte est rempli, en particulier pour ce qui est d'une position des points de balayage (41) à l'intérieur d'une plage de mesure nominale, cependant que les points de balayage (41) sont pris en compte pour l'actualisation de l'information de surface en fonction du filtrage.

10. Procédé selon l'une des revendications 1 à 9, **caractérisé en ce que**
• dans le cadre de la détermination de point unique un point d'objet (24, 25) est mesuré comme point d'appui pour la zone d'objet (21-23, 54-56) et sa position est déterminée, cependant que le point d'appui est pris en compte pour la définition de la zone d'objet (21-23, 54-56), en particulier pour la définition de la surface dans le cadre de l'actualisation de l'information de surface et/ou
• dans le cadre du procédé de mesure d'objet une information d'état atmosphérique est saisie et/ou une information de mesure géométrique est définie, en particulier des données météorologiques et/ou des défauts d'axe de mesure, cependant que
□ l'information d'état atmosphérique et/ou l'information de mesure géométrique est traitée lors de la détermination de la distance pour les points de balayage respectifs (41) et/ou lors de la détermination de la distance par rapport au point d'objet qui existe au moins (24, 25) et sur cette base une correction de la distance est effectuée pour la détermination de la distance respective et/ou
□ les points de balayage (41) déterminés dans le cadre du balayage sont adaptés pour ce qui est de leur position, en particulier la position du nuage de points (20a-c) dans le système de coordonnées d'objet, sur la base des informations d'état atmosphérique et/ou de l'information de mesure géométrique.

11. Procédé selon l'une des revendications 1 à 10, **caractérisé en ce que** le procédé
• est exécuté par l'appareil de mesure géodésique (1, 11), cependant que l'appareil de mesure (1, 11) présente au moins
□ une fonctionnalité de balayage pour la saisie par balayage des points de balayage et pour la production du nuage de points (20a-c) et
□ une fonctionnalité de détermination de point unique pour la détermination extrêmement précise de la position pour le point d'objet qui existe au moins (24, 25),
en particulier cependant que l'appareil de mesure géodésique (1, 11) est configuré selon la revendication 13 ou 14, ou
• est exécuté par le système selon la revendication 14.

12. Appareil de mesure géodésique (1, 11), en particulier station totale, avec
• une base qui définit un axe de pivotement,
• un montage placé sur la base, pivotant par rapport à la base autour de l'axe de pivotement, cependant que le montage défini un axe de basculement qui est substantiellement orthogonal par rapport à l'axe de pivotement,
• une unité de ciblage, en particulier une lunette de visée, cependant que l'unité de ciblage est placée pivotante par rapport au montage autour de l'axe de basculement, et une unité d'émission avec une source de faisceaux pour produire et émettre un faisceau de mesure (3),
• une fonctionnalité de mesure de la distance pour la mesure de distances par rapport aux points (24, 25, 41),
• une fonctionnalité de mesure d'angle pour la mesure d'une orientation du faisceau de mesure (3),
• une unité de commande et de traitement pour le traitement de données et pour la commande de l'appareil de mesure (1, 11) et
• une fonctionnalité de détermination de point unique par laquelle, lors de sa réalisation en étant commandée par l'unité de commande et de traitement, une position d'un point d'objet qui existe au moins à l'intérieur d'au moins une zone d'objet (21-23, 54-56) est mesurée précisément géodésiquement, **caractérisé par**
• une fonctionnalité de balayage pour dériver une information de surface au moins pour la zone d'objet (21-23, 54-56), cependant que, lors de la réalisation de la fonctionnalité de balayage commandée par l'unité de commande et de traitement, il est effectué
□ un balayage indépendant du point d'objet de la zone d'objet (21-23, 54-56) par modification continue de l'orientation du faisceau de mesure (3),
□ une détermination d'une distance respective et d'une orientation respective du faisceau de mesure (3) émis pour la mesure de la distance pour des points de balayage (41) à l'intérieur de la zone d'objet (21-23, 54-56), en particulier dans une résolution prédéterminée des points de balayage, et
□ une production d'un nuage de points (20a-c) qui représente l'information de surface et qui présente les points de balayage (41) et
• une fonctionnalité de détermination d'objet par laquelle, lors de sa réalisation en étant commandée par l'unité de commande et de traitement, l'information de surface est actualisée au moins pour la zone d'objet (21-23, 54-56), en particulier pour l'objet (20), sur la base d'une position du point d'objet qui existe au moins (24, 25) qui est déterminée par la fonctionnalité de détermination de point unique,
en particulier cependant que l'unité de commande et de traitement est configurée telle qu'un procédé selon l'une des revendications 1 à 11 peut être exécuté.

13. Appareil de mesure géodésique (1, 11) selon la revendication 12, **caractérisé en ce que**, lors de la réalisation de la fonctionnalité de détermination de point unique,
• une orientation très précise du faisceau de mesure (3) sur le point d'objet qui existe au moins (24, 25) à l'intérieur de la zone d'objet (21-23, 54-56) est effectuée et
• la position du point d'objet qui existe au moins (24, 25) est déterminée précisément géodésiquement lors de l'orientation du faisceau de mesure (3) sur le point d'objet qui existe au moins (24, 25) au moyen du faisceau de mesure (3), en particulier par détermination de l'orientation pour le faisceau de mesure (3) et par mesure de la distance au moyen du faisceau de mesure.

14. Système constitué par un appareil de mesure géodésique (1, 11) selon la revendication 12 ou 13 et par une unité de réception GNSS, cependant que l'unité de réception GNSS
• est configurée pour la réception de signaux GNSS et la production d'informations de position GNSS à partir des signaux GNSS,
• peut être positionnée mobile par rapport à l'appareil de mesure géodésique (1, 11) et
• est configurée de telle manière que l'information de position GNSS peut être transmise à l'appareil de mesure géodésique (1, 11), en particulier cependant que l'appareil de mesure géodésique (1, 11) présente une unité de réception de données GNSS,
**caractérisé en ce que**,
lors de la réalisation de la fonctionnalité de détermination de point unique, la détermination de la position du point d'objet qui existe au moins (24, 25) se fait sur la base d'informations de position GNSS produites au moyen de l'unité de réception GNSS, cependant que l'unité de réception GNSS existe dans une position relative connue pour ce qui est du point d'objet (24, 25).

15. Produit de programme d'ordinateur avec code de programme qui est mémorisé sur un support qui peut être lu par une machine
• pour la commande du balayage et de la détermination de point unique et
• pour exécuter l'actualisation de l'information de surface
du procédé selon l'une des revendications z1 à 11, en particulier lorsque le programme est réalisé sur une unité de traitement électronique de données configurée comme unité de commande et de traitement d'un appareil de mesure (1, 11) selon l'une des revendications 12 ou 13 ou d'un système selon la revendication 14.
